# EUROPÄISCHE PATENTSCHRIFT

(11) **EP 3 392 290 B1**
(45) Veröffentlichungstag und Bekanntmachung des Hinweises auf die Patenterteilung: **23.09.2020**
(21) Anmeldenummer: 17166917.9
(22) Anmeldetag: 18.04.2017
(51) Int. Cl.: C08G 69/36, C08G 69/26, C08L 77/06, C08L 77/02, C08J 5/04, B32B 5/08

(54) **POLYAMIDFORMMASSE UND DARAUS HERGESTELLTER FORMKÖRPER**
POLYAMIDE MOULDING MATERIAL AND MOLDED BODIES MADE FROM SAME
MASSES MOULÉES EN POLYAMIDE ET CORPS DE FORMAGE AINSI FABRIQUÉS

(43) Veröffentlichungstag der Anmeldung: 24.10.2018
(73) Patentinhaber: EMS-Patent AG, 7013 Domat/Ems (CH)
(72) Erfinder: Schubert, Christian, 7013 Domat/Ems (CH); Hoffmann, Botho, 7013 Domat/Ems (CH); Bayer, Andreas, 7013 Domat/Ems (CH)
(74) Vertreter: Pfenning, Meinig & Partner mbB

(56) Entgegenhaltungen:
- JP-A- 2010 285 553
- US-A1- 2004 087 735
- US-A1- 2012 321 829

## Beschreibung

Die Erfindung betrifft eine Polyamidformmasse, die eine Mischung aus teilkristallinen, aliphatischen Polyamiden und teilkristallinen, teilaromatischen Polyamiden sowie faserförmigen Verstärkungsstoffe enthält oder hieraus gebildet ist. Die teilkristallinen, teilaromatischen Polyamide sind dabei aus einer Diaminkomponente, einer Dicarbonsäurekomponente und gegebenenfalls einer Laktam- und/oder ω-Aminosäurekomponente gebildet. Die Mischung und/oder die Formmasse können weitere Bestandteile beinhalten. Aus diesen Formmassen hergestellte Formkörper finden z.B. Verwendung im Automobilbereich, im Haushaltsbereich, in der Mess-, Regelungs- und Steuertechnik oder im Maschinenbau.

Thermoplastische teilaromatische Polyamide, die amorph oder teilkristallin sein können, stellen eine Gruppe der Polyamide dar, die sich durch ihre hohe Glasübergangstemperatur oder Schmelztemperatur auszeichnen, was aber idR. die Verarbeitung dieser Polyamide erschwert. Diese Polyamide lassen sich bei Hochtemperaturanwendungen in verschiedenen Bereichen einsetzen. Dabei kommt es insbesondere auf eine gute Wärmealterungs- bzw. Wärmeformbeständigkeit und hohe Festigkeit oder Transparenz an.

EP 2 727 951 A1 sowie EP 2 767 555 A1 beschreiben amorphe Copolyamide auf Basis aromatischer Dicarbonsäuren und cycloaliphatischer Diamine und weiterer Monomere als Werkstoff für tragbare elektronische Geräte. Das als weiteres Monomer eingesetzte aliphatische Diamin ist Decandiamin. Optional können weitere Polymere, wie z.B. PA66 enthalten sein, allerdings nur bis zu einer Konzentration von höchstens 30 Gew.-%. Polymermischungen werden keine gearbeitet. Zudem sind diese rein amorphen Copolyamide nicht in der Lage, die thermo-mechanischen Eigenschaften aliphatischer Polyamide zu verbessern.

Auch EP 0 280 736 A1 beschreibt ebenfalls weitgehend amorphe Copolyamide auf Basis der Diamine Hexandiamin (HMDA) und Bis(aminomethyl)-cyclohexan (BAC) bzw. Bis(4-amino-3-methyl-cyclohexyl)methan (MACM) und der Dicarbonsäuren Terephthalsäure (TPS) und Isophthalsäure (IPS). Blends werden nur ganz allgemein erwähnt. Ähnliche Zusammensetzungen beschreibt auch die DE 2 256 214. Ziel ist es, verbesserte transparente Polyamide bereitzustellen. Blends mit anderen Polyamiden werden nicht genannt.

WO 2016/208272A1 beschreibt transparente Copolyamide, deren Diamine-Komponente wenigstens zu 70 Mol-% auf BAC beruht. Blends mit aliphatischen Polyamiden sind nur kursorisch genannt.

WO 2014/198762 beschreibt teilaromatische Copolyamide auf Basis einer Mischung von linear aliphatischen und cycloaliphatischen Diaminen. Gearbeitet werden ausschliesslich die cycloaliphatischen Diamine Isophorondiamin, MACM und Methylen-bis-4-(cyclohexylamin) (PACM), nicht aber BAC, zudem enthalten alle Beispiele Isophthalsäure und sind frei an aliphatischen Dicarbonsäuren. Blends werden weder gearbeitet noch erwähnt.

Während die bekannten amorphen Formmassen des oben genannten Standes der Technik Nachteile in der Wärmeformbeständigkeit und eine geringe Steifigkeit insbesondere bei erhöhter Temperatur und feuchter Umgebung aufweisen, erfordern hochschmelzende teilkristalline, teilaromatische Polyamide sehr hohe Herstellungs-, Verarbeitungs- und Werkzeugtemperaturen, was die Verarbeitung schwierig und aufwendig macht. Zudem sind diese Formmassen oft sehr spröde, haben eine geringe Bruchdehnung und kristallisieren häufig ungenügend. Im Vergleich dazu lassen sich aliphatische Polyamide deutlich besser verarbeiten, sind weniger spröde und haben eine höhere Bruchdehnung. Allerdings fehlt ihnen für anspruchsvolle Anwendungen häufig die erforderliche Steifigkeit, insbesondere in warmer, feuchter Umgebung, nicht zuletzt aufgrund der zu hohen Wasseraufnahme. Somit sind die bekannten Polyamidformmassen hinsichtlich ihrer thermo-mechanischen Eigenschaften und/oder der Verarbeitbarkeit mit Nachteilen behaftet.

Es ist daher Aufgabe der vorliegenden Erfindung, eine auf Polyamiden basierende Formmasse anzugeben, die die zuvor genannten Nachteile nicht aufweist und ein entsprechend vorteilhaftes Eigenschaftsprofil besitzt. Insbesondere ist es Aufgabe der vorliegenden Erfindung Formmassen bereitzustellen, die hinsichtlich der Herstellung und Verarbeitung ähnlich den aliphatischen Polyamiden sind und keine extreme Masse- und Werkzeugtemperaturen, wie dies insbesondere bei teilaromatischen, teilkristallinen Polyamiden der Fall ist, erforderlich machen.

Weiterhin ist es Aufgabe Formmassen bereitzustellen, die eine hohe Steifigkeit auch bei höheren Temperaturen bis 100 °C und feuchter Umgebung aufweisen.

Es ist des Weiteren das Ziel der vorliegenden Erfindung, Polyamidformmassen bereitzustellen, die sich neben einer hohen Bruchspannung und Bruchdehnung (bei 23 °C) auch durch eine hohe Wärmeformbeständigkeit, gemessen als HDT/A und HDT/C, auszeichnen.

Zudem sollen die Formmassen eine geringe Wasseraufnahme, insbesondere im Vergleich zu kurzkettigen aliphatischen Polyamiden aufweisen.

Diese Aufgabe wird durch die Polyamidformmasse mit dem Merkmal des Anspruchs 1 und den Formkörper mit den Merkmalen des Anspruchs 14 gelöst. Die weiteren abhängigen Ansprüche zeigen vorteilhafte Weiterbildungen auf.

Erfindungsgemäß wird somit eine Polyamidformmasse vorgestellt, die nachfolgende Komponenten (I) bis (VI) enthält bzw. hieraus besteht:
(I) 30 bis 100 Gew.-% einer Mischung aus
   (A) 52 bis 88 Gew.-% mindestens einem teilkristallinen, aliphatischen Polyamid; sowie
   (B) 12 bis 48 Gew.-% mindestens einem teilkristallinen, teilaromatischen Polyamid, gebildet aus einer Diaminkomponente (Ba), einer Dicarbonsäurekomponente (Bb) und gegebenenfalls einer Lactam- und/oder ω-Aminosäurekomponente (Bc), wobei die Diaminkomponente (Ba) im Wesentlichen äquimolar zu der Dicarbonsäurekomponente (Bb) eingesetzt wird, die Menge der Lactam- und/oder ω-Aminosäurekomponente (Bc) 0 bis 15 Mol-% und die Summe der Komponenten (Ba) bis (Bc) 100 Mol-% beträgt und wobei die
      Diaminkomponente (Ba) aus
      (Ba1) 62 bis 96 Mol-Anteilen 1,6-Hexandiamin,
      (Ba2) 4 bis 38 Mol-Anteilen Bis(aminomethyl)-cyclohexan sowie
      (Ba3) 0 bis 30 Mol-Anteilen eines oder mehrerer von (Ba2) verschiedener cycloaliphatischer Diamine besteht, wobei die Summe von (Ba2) und (Ba3) 4 bis 38 Mol-Anteile und die Summe von (Ba1), (Ba2) und (Ba3) 100 Mol-Anteile beträgt,
      Dicarbonsäurekomponente (Bb) aus
      (Bb1) 64 bis 100 Mol-Anteilen Terephthalsäure,
      (Bb2) 0 bis 18 Mol-Anteilen Isophthalsäure sowie
      (Bb3) 0 bis 18 Mol-Anteilen einer oder mehrerer aliphatischer Dicarbonsäuren mit 6 bis 18 C-Atomen besteht,
         wobei die Summe von (Bb1), (Bb2) und (Bb3) 100 Mol-Anteile beträgt,
   und
   die Lactam- und/oder ω-Aminosäurekomponente (Bc) aus einem oder mehreren Lactamen und/oder ω-Aminosäuren besteht, wobei die Summe der Lactame und/oder ω-Aminosäuren 100 Mol-Anteile beträgt,
   wobei die Anteile von (A) und (B) bezogen sind auf die Summe der eingesetzten Polyamide (A) und (B) und in der Summe 100 Gew.-% ausmachen,
(II) 0 - 70 Gew.-% faserförmige Verstärkungsstoffe;
(III) 0 - 30 Gew.-% partikuläre Füllstoffe verschieden von (II), (IV) bis (VI);
(IV) 0 - 20 Gew.-% Schlagzähmodifikatoren;
(V) 0 - 2.0 Gew.-% Hitzestabilisatoren;
(VI) 0 - 6 Gew.-% Hilfsstoffe und/oder Additive, verschieden von (II)-(V);
wobei die Summe der Komponenten (I)-(VI) 100 Gew.-% der Polyamidformmasse ausmacht.

Die vorliegende Erfindung betrifft somit eine Polyamidformmasse, die eine Mischung aus zwei unterschiedlichen Polyamiden beinhaltet oder hieraus besteht, wobei die Mischung zumindest ein teilkristallines, aliphatisches Polyamid (A) und ein teilkristallines, teilaromatisches Polyamid (B) enthält oder hieraus gebildet ist.

Die Mischung kann ggf. eine oder mehrere weitere Komponenten (II) bis (VI) beinhalten, wobei die Gewichtssumme der Polyamidformmasse auf Grundlage der Komponenten (I) bis (VI) in deren oben angegebenen Gehalt berechnet wird; die Gewichtssumme beträgt stets 100 Gew.-%.

Es ist ebenso möglich, dass die Polyamidformmasse zu 100 Gew.-% aus der Mischung der Polyamide (A) und (B) gebildet ist und somit keine weiteren Komponenten beinhaltet.

Überraschenderweise konnte festgestellt werden, dass mit den erfindungsgemäßen Polyamidformmassen eine Herstellung und Verarbeitung unter ähnlichen Bedingungen wie bei aliphatischen Polyamiden möglich ist. So sind im Vergleich zu den teilaromatischen, teilkristallinen Polyamiden bei der Compoundierung der erfindungsgemässen Formmassen 40-60 °C niedrigere Zylindertemperaturen erforderlich, wodurch eine geringere Materialbeanspruchung einhergeht und energiesparend produziert werden kann.

Auch die Verarbeitung, insbesondere im Spritzguss, kann analog zur Herstellung mit einer deutlich tieferen Massetemperatur und ggbf. tieferen Werkzeugtemperaturen erfolgen. Beispielsweise kann die Massetemperatur im Vergleich zu den teilaromatischen, teilkristallinen Polyamiden bei einer auf PA66 basierenden Formmasse von 340 auf 310 °C reduziert werden. Die zur Verarbeitung von Hochtemperaturpolyamiden notwendigen Bedingungen können somit vermieden werden.

Zudem wurde festgestellt, dass aus den erfindungsgemäßen Formmassen hergestellte Formkörper eine hohe Steifigkeit auch bei höheren Temperaturen, d.h. bis 100 °C im trockenen und konditionierten Zustand aufweisen. Der Zug-E-Modul nimmt bei steigender Temperatur weniger stark ab, als bei aliphatischen Polyamiden oder den bekannten Blends des Standes der Technik. Gleichzeitig bleiben die Festigkeit (Bruchspannung) und die Bruchdehnung bei 23 °C weitgehend erhalten.

Zudem können mit den erfindungsgemäßen Formmassen höhere Werte für die Wärmeformbeständigkeit (HDT/A und HDT/C) realisiert werden.

Auch die Wasseraufnahme kann bei den erfindungsgemäßen Polyamidformmassen deutlich reduziert werden, insbesondere fällt dieser Effekt positiv ins Gewicht, wenn kurzkettige aliphatische Polyamide (A) in der Polyamidformmasse enthalten sind.

Die nachfolgenden Ausführungen betreffen bevorzugte Ausgestaltungen der Erfindung.

### Komponente (I)

Die Mischung aus den beiden zuvor genannten Polyamiden (A) und (B) (= Komponente (I)) beinhaltet die jeweiligen Polyamide (A) und (B) bevorzugt in den nachfolgenden Mengen:
(A) 60 bis 85 Gew.-%, bevorzugt 68 bis 82 Gew.-% des mindestens einen teilkristallinen, aliphatischen Polyamids; sowie
(B) 15 bis 40 Gew.-%, bevorzugt 18 bis 32 Gew.-% des mindestens einen teilkristallinen, teilaromatischen Polyamids

In Summe ergeben die Anteile der Polyamide (A) und (B) dabei wie oben bereits definiert 100 Gew.% der Komponente (I).

In einer bevorzugten Ausführungsform macht die Komponente (I) 35 bis 84.9 Gew.-%, besonders bevorzugt 40 bis 79.8 oder 40 bis 69.8 Gew.-% der Polyamidformmasse aus.

### teilkristallines, aliphatisches Polyamid

Die Mischungen (Komponente (I)) der erfindungsgemäßen Polyamidformmassen enthalten als Komponente (A) mindestens ein teilkristallines, aliphatisches Polyamid.

Gemäß einer bevorzugten Ausführungsform ist das teilkristalline, aliphatische Polyamid (Komponente (A)) ausgewählt aus der Gruppe bestehend aus Polyamid 46, Polyamid 6, Polyamid 56, Polyamid 66, Polyamid 11, Polyamid 12, Polyamid 1212, Polyamid 1010, Polyamid 1012, Polyamid 1112, Polyamid 610, Polyamid 106, Polyamid 612, Polyamid 614, Polyamid 616, Polyamid 516, Polyamid 618, Polyamid 69, Polyamid 810, deren Copolyamide oder deren Gemische, Blends oder Legierungen.

Als Copolyamid im voranstehenden Sinne wird dabei ein Polyamid verstanden, das mehrere der genannten Monomereinheiten aufweist.

Die Schreibweisen und Abkürzungen für Polyamide und deren Monomere sind in der ISO-Norm DIN EN ISO 16396-1:2015 festgelegt.

Beispielsweise kann das teilkristalline, aliphatische Polyamid (A) eine Lösungsviskosität ηᵣₑₗ (auch als "relative Viskosität" bezeichnet, Bestimmung gemäß DIN EN ISO 307:2013), gemessen in m-Kresol (0.5 g Polymer in 100 ml m-Kresol, 20 °C) im Bereich von 1.5 bis 3.0, bevorzugt im Bereich von 1.6 bis 2.6, insbesondere im Bereich von 1.7 bis 2.3 aufweisen.

### teilkristallines, teilaromatisches Polyamid (B)

Des Weiteren beinhalten die Mischungen der erfindungsgemäßen Polyamidformmassen als Komponente (B) mindestens ein teilkristallines, teilaromatisches Polyamid, das aus einer Diaminkomponente (Ba), einer Dicarbonsäurekomponente (Bb) und gegebenenfalls einer Lactam- und/oder ω-Aminosäurekomponente (Bc) gebildet ist.

Enthält das teilkristalline, teilaromatische Polyamid (B) nur Diamine (Ba) und Disäuren (Bb) so ergänzen sich deren molare Mengen auf 50 Mol-% für die Summe aller Diamine und 50 Mol-% für die Summe aller Disäuren und die Summe der Diamin- und Disäure-Mengen ergibt 100 Mol-% für das teilkristalline, teilaromatische Polyamid (B).

Mit den Mol-Anteilen kann somit das relative Verhältnis der jeweiligen Verbindungen, die die Diaminkomponente (Ba) bzw. die Dicarbonsäurekomponente (Bb) ausmachen, angegeben werden, während sich die Anteile absolut zu 100 Mol-% addieren.

Enthalten die erfindungsgemäßen Copolyamide neben Diaminen (Ba) und Disäuren (Bb) auch Lactame oder ω-Aminosäuren (Bc) zu X Mol-%, so beträgt die Summe aller Diamine (Ba) nur noch (50 - 0.5 X) Mol-% und die Summe aller Disäuren (Bb) (50 - 0.5 X) Mol-%, bezogen auf 100 Mol-% teilkristalline, teilaromatische Polyamid (B).

Bei den Mengenangaben zu den Disäuren und Diaminen der teilkristallinen, teilaromatischen Polyamid (B) gilt, dass die Summe der molaren Mengen aller Diamine im Wesentlichen gleich der Summe der molaren Mengen aller Disäuren ist. Im Wesentlichen gleich bedeutet dabei einen maximalen Überschuss der Disäuren oder der Diamine von 3 %, d.h. das molare Verhältnis von Disäuren zu Diaminen beträgt 1.03 : 1 bis 1 : 1.03. Bevorzugt ist ein maximalen Überschuss der Disäuren oder der Diamine von 2 %, d.h. das molare Verhältnis von Disäuren zu Diaminen beträgt 1.02 : 1 bis 1 : 1.02.

Die Mengenangaben bezüglich der Monomere sind dabei so zu verstehen, dass sich ein entsprechendes Molverhältnis dieser bei der Polykondensation eingesetzten Monomere auch in den derart durch Polykondensation hergestellten Copolyamiden wiederfindet.

Die Schreibweisen und Abkürzungen für Polyamide und deren Monomere sind in der ISO-Norm 16396-1:2015 festgelegt.

Eine bevorzugte Ausführungsform sieht vor, dass die Diaminkomponete (Ba) aus
(Ba1) 65 bis 90 Mol-Anteilen 1,6-Hexandiamin,
(Ba2) 10 bis 35 Mol-Anteilen Bis(aminomethyl)-cyclohexan sowie
(Ba3) 0 bis 25 Mol-Anteilen eines oder mehrerer von (Ba2) verschiedener cycloaliphatischer Diamine
ausgewählt ist, wobei die Summe von (Ba2) und (Ba3) 10 bis 35 Mol-Anteile und die Summe von (Ba1), (Ba2) und (Ba3) 100 Mol-Anteile beträgt.

Weiter bevorzugt ist, dass die Diaminkomponete (Ba) aus
(Ba1) 70 bis 82 Mol-Anteilen 1,6-Hexandiamin,
(Ba2) 18 bis 30 Mol-Anteilen Bis(aminomethyl)-cyclohexan sowie
(Ba3) 0 bis 12 Mol-Anteilen eines oder mehrerer von (Ba2) verschiedener cycloaliphatischer Diamine
ausgewählt ist, wobei die Summe von (Ba2) und (Ba3) 18 bis 30 Mol-Anteile und die Summe von (Ba1), (Ba2) und (Ba3) 100 Mol-Anteile beträgt.

Gemäß einer besonders bevorzugten Ausführungsform ist die Diaminkomponente (Ba) aus
(Ba1) 65 bis 85 Mol-Anteilen 1,6-Hexandiamin,
(Ba2) 15 bis 35 Mol-Anteilen Bis(aminomethyl)-cyclohexan, insbesondere 1,3-Bis(aminomethyl)-cyclohexan,
ausgewählt, wobei die Summe von (Ba1) und (Ba2) 100 Mol-Anteile beträgt.

Was die Disäurekomponente anbelangt ist es bevorzugt, dass diese aus
(Bb1) 70 bis 100 Mol-Anteilen Terephthalsäure,
(Bb2) 0 bis 15 Mol-Anteilen Isophthalsäure sowie
(Bb3) 0 bis 15 Mol-Anteilen einer oder mehrerer aliphatischer Dicarbonsäuren mit 6 bis 18 C-Atomen
ausgewählt ist und die Summe von (Bb1), (Bb2) und (Bb3) 100 Mol-Anteile beträgt.

Weiter bevorzugt ist, dass die Dicarbonsäurekomponente (Bb) aus
(Bb1) 80 bis 100 Mol-Anteilen Terephthalsäure,
(Bb2) 0 bis 10 Mol-Anteilen Isophthalsäure sowie
(Bb3) 0 bis 10 Mol-Anteilen einer oder mehrerer aliphatischer Dicarbonsäuren mit 6 bis 18 C-Atomen
ausgewählt ist und die Summe von (Bb1), (Bb2) und (Bb3) 100 Mol-Anteile beträgt.

Gemäß einer besonders bevorzugten Ausführungsform ist die die Dicarbonsäurekomponente (Bb) aus
(Bb1) 80 bis 100 Mol-Anteilen Terephthalsäure,
(Bb3) 0 bis 20 Mol-Anteilen einer oder mehrerer aliphatischer Dicarbonsäuren mit 6 bis 18 C-Atomen, insbesondere 6 bis 12 C-Atomen
ausgewählt, wobei die Summe von (Bb1) und (Bb3) 100 Mol-Anteile beträgt.

In einer bevorzugten Ausführungsform beträgt die Menge der Lactam- und/oder ω-Aminosäurekomponente (Bc) 0 bis 10 Mol-%, insbesondere bevorzugt 0 bis 5 Mol-%.

Es ist bevorzugt, dass die Summe der Mol-Anteile von (Ba2) Bis(aminomethyl)-cyclohexan, (Ba3) cycloaliphatischem Diamin, (Bb2) Isophthalsäure und (Bb3) aliphatischer Dicarbonsäure maximal 38 Mol-Anteile, bevorzugt maximal 35 Mol-Anteile, besonders bevorzugt maximal 30 Mol-Anteile beträgt.

Besonders bevorzugt ist eine Diaminkomponente (Ba) aus
(Ba1) 65 bis 85 Mol-Anteilen 1,6-Hexandiamin,
(Ba2) 15 bis 35 Mol-Anteilen Bis(aminomethyl)-cyclohexan, insbesondere 1,3-Bis(aminomethyl)-cyclohexan, ausgewählt ist
wobei die Summe von (Ba1) und (Ba2) 100 Mol-Anteile beträgt

Alternativ oder ergänzend hierzu ist es ebenso bevorzugt, wenn
die Dicarbonsäurekomponente (Bb) aus
(Bb1) 80 bis 100 Mol-Anteilen Terephthalsäure,
(Bb3) 0 bis 20 Mol-Anteilen einer oder mehrerer aliphatischer Dicarbonsäuren mit 6 bis 18 C-Atomen, insbesondere 6 bis 12 C-Atomen, ganz besonders bevorzugt Adipinsäure, ausgewählt ist und
wobei die Summe von (Bb1) und (Bb3) 100 Mol-Anteile beträgt.

Eine weitere bevorzugte Ausführungsform sieht vor, dass das mindestens eine teilkristalline, teilaromatische Polyamid eine Glasübergangstemperatur von mindestens 140 °C, bevorzugt von mindestens 145 °C, besonders bevorzugt von mindestens 150 °C aufweist.

Vorzugsweise weist das das mindestens eine teilkristalline, teilaromatische Polyamid eine Schmelztemperatur von höchstens 340 °C, bevorzugt von höchstens 335 °C, besonders bevorzugt von 300 bis 330 °C auf.

Es ist bevorzugt, dass das das mindestens eine teilkristalline, teilaromatische Polyamid (B) eine als Differenz aus Schmelzwärme und Kristallisationswärme bestimmte Kristallisationsfähigkeit von mindestens 15 J/g, bevorzugt mindestens von 20 J/g und besonders bevorzugt von mindestens 25 J/g aufweist.

Vorzugsweise weist das das mindestens eine teilkristalline, teilaromatische Polyamid eine relative Viskosität, gemessen bei 20 °C und einer Konzentration von 0.5 g/dl in m-Kresol, von 1.45 bis 1.95, bevorzugt 1.50 bis 1.75, besonders bevorzugt 1.55 bis 1.68 auf.

Es ist bevorzugt, dass das mindestens eine teilkristalline, teilaromatische Polyamid ein Elastizitätsmodul zwischen 2400 und 4200 MPa, bevorzugt 2500 bis 4000 MPa, besonders bevorzugt 2600 bis 3900 MPa aufweist.

Die zuvor genannten physikalischen Parameter werden dabei gemäß den im experimentellen Teil angegebenen Normen bestimmt.

### Komponente (II)

Des Weiteren enthalten die Mischungen der erfindungsgemäßen Formmassen vorzugsweise faserförmige Verstärkungsstoffe (Komponente II), bevorzugt in einer Konzentration von 15 bis 60 Gew.-%, besonders bevorzugt 20 bis 55 Gew.-% in Form von Fasern, wie z.B. Glasfasern, Kohlenstofffasern Metallfasern, Whiskers und/oder Mineralfasern. Besonders bevorzugt enthalten die Formmassen 30 bis 50 Gew.-% faserförmige Verstärkungsstoffe.

Bevorzugtermaßen wird Komponente (II) in Form von Glasfasern, die z.B. in Form von sogenannten Kurzfasern (z.B. Schnittglas mit einer Länge von mindestens 0.2 mm, bevorzugt 1 bis 25 mm, weiter bevorzugt 1.5 bis 20 mm, besonders bevorzugt 2 bis 12 mm und ganz besonders bevorzugt von 2 bis 8 mm) oder Endlosfasern (Rovings) verwendet werden, eingesetzt. Die Glasfasern können unterschiedliche Querschnittsflächen aufweisen, die rund, oval, elliptisch, eckig oder rechteckig sein kann, wobei Glasfasern mit kreisförmigem Querschnitt (runde Fasern) und mit nicht-kreisförmigem Querschnitt (flache Fasern) bevorzugt sind.

Werden die Glasfasern als Endlosfasern (Roving) beim Pultrusionsverfahren eingesetzt, weisen sie vorzugsweise einen Durchmesser von 10 bis 20 µm, bevorzugt von 10 bis 18 µm, besonders bevorzugt von 10 bis 14 µm auf.

Die Kohlenstofffasern weisen vorzugsweise einen Durchmesser von 3 bis 12 µm, bevorzugt 4 bis 10 µm, besonders bevorzugt 4 bis 9 µm auf.

Eine bevorzugte Ausführungsform der Polyamidformmasse nach der Erfindung zeichnet sich dadurch aus, dass die Komponente (II) ausschliesslich aus Glasfasern bestehen, die im Bereich von 15 - 60 Gew.-%, bevorzugt im Bereich von 20 - 55 oder 30 - 50 Gew.-%, bezogen auf die Formmasse vorliegen.

Glasfasern mit kreisförmigem Querschnitt, also runde Glasfasern, haben einen Durchmesser im Bereich von 3-20 µm, bevorzugt im Bereich von 5-13 µm und besonders bevorzugt im Bereich von 5-10 µm. Sie werden bevorzugt als Kurzglasfaser (Schnittglas mit einer Länge von 0.2 bis 20 mm, bevorzugt 2-12 mm) eingesetzt.

Bei den flachen Glasfasern, also Glasfasern mit nicht-kreisförmiger Querschnittsfläche, werden solche mit einem Abmessungsverhältnis von der Hauptquerschnittsachse zur senkrecht darauf stehenden Nebenquerschnittsachse von mehr als 2.5, bevorzugt im Bereich von 2.5 bis 6, insbesondere im Bereich von 3 bis 5 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 5 bis 35 µm, insbesondere im Bereich von 12 bis 30 µm und die Länge der Nebenquerschnittsachse im Bereich von 3 bis 17 µm, insbesondere im Bereich von 4 bis 10 µm liegt. Dabei weisen die flachen Glasfasern eine möglichst hohe Packungsdichte auf, d.h. die Glasquerschnittsfläche füllt ein gedachtes, den Glasfaserquerschnitt möglichst exakt umgebendes Rechteck zu mindestens 70%, bevorzugt mindestens 80% und insbesondere bevorzugt zu mindestens 85% aus.

Zur Verstärkung der erfindungsgemäßen Formmassen können auch Mischungen von Glasfasern mit kreisförmigem und nicht-kreisförmigem Querschnitt verwendet werden, wobei der Anteil an flachen Glasfasern bevorzugtermaßen überwiegt, d.h. mehr als 50 Gew.-% der Gesamtmasse der Fasern ausmacht.

Das Erscheinungsbild der Glasfasern kann gestreckt oder spiralförmig sein.

Es können Glasfasern aus allen Glassorten, wie z.B. A-, C-, D-, E-, M-, S-, R-Glas, oder beliebigen Mischungen davon eingesetzt werden.

Vorzugsweise ist die Komponente (II) ausgewählt aus der Gruppe bestehend aus: E-Glasfasern (diese bestehen gemäß ASTM D578-00 aus 52-62% Siliciumdioxid, 12-16% Aluminiumoxid, 16-25% Calciumoxid, 0-10% Borax, 0-5% Magnesiumoxid, 0-2% Alkalioxide, 0-1.5% Titandioxid und 0-0.3% Eisenoxid; bevorzugt haben sie eine Dichte von 2.58±0.04 g/cm3, einen Zug-E-Modul von 70-75 GPa, eine Zugfestigkeit von 3000-3500 MPa und eine Reissdehnung von 4.5-4.8%), A-Glasfasern (63-72% Siliciumdioxid, 6-10% Calciumoxid, 14-16% Natrium- und Kaliumoxid, 0-6% Aluminiumoxid, 0-6% Boroxid, 0-4% Magnesiumoxid), C-Glasfasern (64-68% Siliciumdioxid, 11-15% Calciumoxid, 7-10% Natrium- und Kaliumoxid, 3-5% Aluminiumoxid, 4-6% Boroxid, 2-4% Magnesiumoxid), D-Glasfasern (72-75% Siliciumdioxid, 0-1% Calciumoxid, 0-4% Natrium- und Kaliumoxid, 0-1% Aluminiumoxid, 21-24% Boroxid), Basaltfasern (Mineralfaser mit der ungefähren Zusammensetzung: 52% SiO2, 17% Al₂O₃, 9% CaO, 5% MgO, 5% Na₂O, 5% Eisenoxid sowie weiteren Metalloxiden), AR-Glasfasern (55-75% Siliciumdioxid, 1-10% Calciumoxid, 11-21% Natrium- und Kaliumoxid, 0-5% Aluminiumoxid, 0-8% Boroxid, 0-12%Titandioxid, 1-18% Zirkonoxid, 0-5% Eisenoxid) sowie Mischungen davon.

Eine bevorzugte Ausführungsform der Komponente (II) sind hochfeste Glasfasern beruhend auf dem ternären System Siliciumdioxid-Aluminiumoxid-Magnesiumoxid oder auf dem quaternären System Siliciumdioxid-Aluminiumoxid-Magnesiumoxid-Calciumoxid, wobei die Summe der Gehalte von Siliciumdioxid, Aluminiumoxid und Magnesiumoxid wenigstens 78 Gew.-%, bevorzugt wenigstens 87% und besonders bevorzugt wenigstens 92% bezogen auf die gesamte Glaszusammensetzung beträgt.

Konkret wird bevorzugt eine Zusammensetzung von 58-70 Gew.-% Siliciumdioxid (SiO₂), 15-30 Gew.-% Aluminiumoxid (Al₂O₃), 5-15 Gew.-% Magnesiumoxid (MgO), 0-10 Gew.-% Calciumoxid (CaO) und 0-2 Gew.-% weitere Oxide, wie z.B. Zirkoniumdioxid (ZrO₂), Boroxid (B₂O₃), Titandioxid (TiO₂) oder Lithiumoxid (Li₂O) eingesetzt. In einer weiteren Ausführungsform besitzt die hochfeste Glasfaser eine Zusammensetzung von 60-67 Gew.-% Siliciumdioxid (SiO₂), 20-28 Gew.-% Aluminiumoxid (Al₂O₃), 7-12 Gew.-% Magnesiumoxid (MgO), 0-9 Gew.-% Calciumoxid (CaO) sowie 0-1.5 Gew.-% weitere Oxide, wie z.B. Zirkoniumdioxid (ZrO₂), Boroxid (B₂O₃), Titandioxid (TiO₂), Lithiumoxid (Li₂O).

Insbesondere ist bevorzugt, wenn die hochfeste Glasfaser die nachfolgende Zusammensetzung aufweist: 62-66 Gew.-% Siliciumdioxid (SiO₂), 22-27 Gew.-% Aluminiumoxid (Al₂O₃), 8-12 Gew.-% Magnesiumoxid (MgO), 0- 5Gew.-% Calciumoxid (CaO), 0-1 Gew.-% weitere Oxide, wie z.B. Zirkoniumdioxid (ZrO₂), Boroxid (B₂O₃), Titandioxid (TiO₂), Lithiumoxid (Li₂O).

Die hochfeste Glasfaser besitzt vorzugsweise eine Zugfestigkeit von größer oder gleich 3700 MPa, vorzugsweise von wenigstens 3800 oder 4000 MPa, eine Reissdehnung von mindestens 4.8%, vorzugsweise von wenigstens 4.9 oder 5.0 %, und einen Zug-E-Modul von grösser 75 GPa, vorzugsweise von mehr als 78 oder 80 GPa, wobei diese Glaseigenschaften an Einzelfasern (pristine single filament) mit einem Durchmesser von 10 µm und eine Länge von 12.7 mm bei einer Temperatur von 23°C und einer relativen Luftfeuchte von 50% zu bestimmen sind. Konkrete Beispiele für diese hochfesten Glasfasern der Komponente (II) sind S-Glasfasern von Owens Corning mit 995-Schlichte, T-Glasfasern von Nittobo, HiPertex von 3B, HS4-Glasfasern von Sinoma Jinjing Fiberglass, R-Glasfaern von Vetrotex sowie S-1- und S-2-Glasfasern von AGY.

Die erfindungsgemäß z.B. als Roving eingesetzten Glasfasern (Endlosfasern) weisen einen Durchmesser (bei runden Glasfasern) bzw. eine Nebenquerschnittsachse (bei flachen Glasfasern) von 8 bis 20 µm, bevorzugt von 12 bis 18 µm auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen, d.h. ein Verhältnis von Haupt- zur Nebenquerschnittsachse von 2.5 bis 5. Die Endlosfasern können aus den oben beschriebenen Glassorten hergestellt sein, wobei Endlosfasern auf Basis von E-Glas und den hochfesten Glassorten bevorzugt sind. Diese Endlosfasern werden in die erfindungsgemäßen Polyamidformmassen durch bekannte Verfahren zur Herstellung von langfaserverstärktem Stäbchengranulat eingearbeitet, insbesondere durch Pultrusionsverfahren, bei denen der endlose Faserstrang (Roving) mit der Polymerschmelze vollständig durchtränkt und anschließend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgießen, Pressen) zu Formteilen weiterverarbeitet werden.

Bevorzugt werden als Komponente (II) Glasfasern aus E-Glas, mit nicht-kreisförmigem Querschnitt (flache Fasern) und mit einem Achsenverhältnis der Hauptquerschnittsachse zur Nebenquerschnittsachse von wenigstens 2.5, und/oder hochfeste Glasfasern mit kreisförmigem oder nicht-kreisförmigem Querschnitt und einer Glaszusammensetzung, beruhend im Wesentlichen auf den Komponenten Siliciumdioxid, Aluminiumoxid und Magnesiumoxid, wobei der Anteil an Magnesiumoxid (MgO) 5-15 Gew.-% und der Anteil an Calciumoxid 0 - 10 Gew.-% beträgt.

Die Glasfasern der Komponente (II) weisen bevorzugt als flache E-Glasfasern eine Dichte von 2.54 - 2.62 g/cm³, einen Zug-E-Modul von 70 - 75 GPa, eine Zugfestigkeit von 3000 - 3500 MPa und eine Bruchdehnung von 4.5 - 4.8% auf, wobei die mechanischen Eigenschaften an Einzelfasern mit einem Durchmesser von 10 µm und eine Länge von 12.7 mm bei 23°C und einer relativen Luftfeuchte von 50% bestimmt wurden.

Die erfindungsgemäßen Glasfasern können mit einer für Thermoplaste, insbesondere für Polyamid geeigneten Schlichte, enthaltend einen Haftvermittler auf Basis einer Amino- oder Epoxysilanverbindung, versehen sein.

Generell gesprochen handelt es sich gemäß einer weiteren bevorzugten Ausführungsform der Erfindung also bei der Komponente (II), welche vorzugsweise in der Formmasse in einem Anteil im Bereich von 20-60 Gew.-%, insbesondere vorzugsweise im Bereich von 25-55 Gew.-% vorliegt, um Glasfasern, Kohlefasern, oder eine Mischung solcher Fasern handelt, wobei es sich vorzugsweise um Glasfasern handelt, insbesondere bevorzugt um Glasfasern mit kreisförmiger Querschnittsfläche, Glasfasern mit nicht-kreisförmiger Querschnittsfläche, oder eine Mischung solcher Glasfasern, wobei insbesondere bevorzugt Glasfasern mit kreisförmiger Querschnittsfläche einen Durchmesser im Bereich von 3-12 µm, vorzugsweise im Bereich von 5-13 µm und insbesondere bevorzugt im Bereich von 5-12 µm aufweisen, und Glasfasern mit nicht-kreisförmiger Querschnittsfläche vorzugsweise ein Abmessungsverhältnis von der Hauptquerschnittsachse zur senkrecht darauf stehenden Nebenquerschnittsachse von mehr als 2.5, vorzugsweise im Bereich von 2.5 - 6 oder 3 - 5 aufweisen, wobei die Hauptquerschnittsachse bevorzugtermaßen eine Länge im Bereich von 5 - 35 µm, bevorzugt im Bereich von 12 - 30 µm und die Nebenquerschnittsachse bevorzugtermaßen eine Länge im Bereich von 3-17 µm, vorzugsweise im Bereich von 4-10 µm aufweist.

Die faserförmigen Verstärkungsstoffe können oberflächenbehandelt sein, d.h. sie können mit einem geeigneten Schlichte- oder Haftvermittlersystem ausgerüstet sein. Dazu können zum Beispiel Systeme auf Basis von Fettsäuren, Wachsen, Silanen, Titanaten, Polyamiden, Urethanen, Polyhydroxyether, Epoxiden, Nickel respektive Kombinationen oder Mischungen davon verwendet werden.

### Komponente (III)

Die Mischung der Polyamidformmasse enthält optional in Form von **Komponente (III)** auch partikuläre Füllstoffe, die ihrer Natur nach verschieden von den anderen Komponenten der Polyamidformmasse sind, bevorzugt in einem Anteil von höchstens 30 Gewichtsprozent.

Gemäß einer bevorzugten Ausführungsform liegt die Komponente (III) in einem Anteil, bezogen auf die Summe der Komponenten (I)-(VI), im Bereich von höchstens 20 Gew.-%, vorzugsweise im Bereich von höchstens 10 Gew.-%, insbesondere vorzugsweise im Bereich von 0.1-5 Gew.-% vor.

Die Komponente (III) kann, generell gesprochen, sphäroide und/oder ellipsoide Füllstoffe enthalten oder aus diesen aufgebaut sein, wobei vorzugsweise Silikat-, Metall-, Kunststoff-, Metalloxid-, Glas-, Mineralstoff-, Farbstoff-, Pigmentpartikel sowie Mischungen solcher Partikel, wobei die Füllstoffe der Komponente (III) insbesondere bevorzugtermaßen ausgewählt als Füllstoffe, in oberflächenbehandelter oder unbehandelter Form, ausgewählt aus der Gruppe bestehend aus: Talk, Glimmer, Silikat, wie insbesondere Eisenaluminiumsilikat- und/oder Natriumaluminiumsilikat-Partikel, Quarz, Quarzmehl, Titandioxid, Wollastonit, Kaolin, Kieselsäuren, insbesondere amorphe Kieselsäuren, gemahlenes oder gefälltes Calciumcarbonat Magnesiumcarbonat, Magnesiumhydroxid, Kreide, Kalk, Feldspat, Glimmer, Bariumsulfat, Bariumtitanat, Zinksulfid, Titandioxid, Zinkoxid, Glaskugeln, insbesondere Voll- oder Hohl-Glaskugeln, gemahlenes Glas, insbesondere gemahlene Glasfasern, Glasschuppen, Glasflocken, dauerhaft magnetische bzw. magnetisierbare Metallverbindungen und/oder Legierungen, anorganische Pigmente, wie insbesondere Eisenoxid, Eisenmanganoxid, Metallpulver, insbesondere Eisenpulver, Kupferpulver, Aluminiumpulver, Metallflocken, insbesondere Aluminiumflocken, Eisenflocken, metallbeschichtete Füllstoffe, Metalloxide, insbesondere Spinelle, wie insbesondere Kupfereisenspinell, Kupferchromoxid, Kupferchromit (CuCr₂O₄), Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Nickel-Antimon-Titanat, Chrom-Antimon-Titanat, hart- oder weichmagnetische Metalle oder Legierungen bzw. Keramiken, hohlkugelige Silikatfüllstoffe, Aluminiumoxid, Bornitrid, Borcarbid, Aluminiumnitrid, Calciumfluorid, sowie Mischungen der Elemente aus dieser Gruppe.

Gemäß dieser weiteren bevorzugten Ausführungsform kann die Formmasse also als Komponente (III) weitere Füllstoffe enthalten, in einem Anteil im Bereich von höchstens 20 Gew.-%, vorzugsweise im Bereich von höchstens 10 Gew.-%, insbesondere vorzugsweise im Bereich von 0.1-5 Gew.-% in der Polyamidformmasse, wobei die erfindungsgemäßen thermoplastischen Formmassen auch einen teilchenförmigen Füllstoff oder eine Mischung aus zwei oder mehr unterschiedlichen teilchenförmigen Füllstoffen in Kombination mit Verstärkungsstoffen enthalten können.

Die Füllstoffe können oberflächenbehandelt sein, d.h. sie können mit einem geeigneten Schlichte- oder Haftvermittlersystem ausgerüstet sein. Dazu können zum Beispiel Systeme auf Basis von Fettsäuren, Wachsen, Silanen, Titanaten, Polyamiden, Urethanen, Polyhydroxyether, Epoxiden, Nickel respektive Kombinationen oder Mischungen davon verwendet werden.

### Komponente (IV)

Die erfindungsgemäße Formmasse kann zudem bis zu 20 Gew.-% eines oder mehrerer Schlagzähmodifikatoren (SZM, Komponente (IV)) beinhalten. Bevorzugt wird eine SZM-Konzentration im Bereich zwischen 5 und 15 Gew.-%, insbesondere von 5-12 Gew.-%. Insbesondere ist bevorzugt, dass die Formmasse frei von Schlagzähmodifiern ist.

Generell Schlagzähmodifikatoren ausgewählt sein aus der Gruppe bestehend aus: Olefinpolymere, niedrig-, mittel- und hochdichte Polyethylene, Polypropylen, Polybutadien, Poly-4-methylpenten, Ethylen-Propylen-Block- oder statistische Copolymere, Ethylen-Methylhexadien-Copolymere, Propylen-Methylhexadien-Copolymere, Ethylen-Propylen-Buten-Copolymere, Ethylen-Propylen-Hexen-Copolymere, Ethylen-Propylen-Methylhexadien-Copolymere, Poly(ethylen-vinylacetat) (EVA), Poly(ethylen-ethylacrylat) (EEA), Ethylen-Octen-Copolymer, Ethylen-Buten-Copolymer, Ethylen-Hexen-Copolymer, Ethylen-Propylen-Dien-Terpolymere sowie Kombinationen der genannten Polymere, bevorzugt funktionalisiert mit Säureanhydridgruppen.

Der SZM kann ein Naturkautschuk, Polybutadien, Polyisopren, Polyisobutylen, ein Mischpolymerisat des Butadiens und/oder Isoprens mit Styrol oder Styrolderivaten und anderen Comonomeren, ein hydriertes Mischpolymerisat und oder ein Mischpolymerisat, das durch Pfropfen oder Copolymerisation mit Säureanhydriden, (Meth)acrylsäure und deren Ester entstanden ist, sein. Der Schlagzähmodifier kann auch ein Pfropfkautschuk mit einem vernetzten elastomeren Kern, der aus Butadien, Isopren oder Alkylacrylaten besteht und eine Pfropfhülle aus Polystyrol hat, ein unpolares oder polares Olefinhomo- und copolymeres wie Ethylen-Propylen-, Ethylen-Propylen-Dien- und Ethylen-Octen- oder Ethylen-Vinylacteat-Kautschuk oder ein unpolares oder polares Olefinhomo- und copolymeres, das durch Pfropfen oder Copolymerisation mit Säureanhydriden, (Meth)acrylsäure und deren Ester entstanden ist, sein. Der Schlagzähmodifier kann auch ein carbonsäure- funktionalisiertes Copolymeres wie Poly(ethen-co-(meth)acrylsäure) oder Poly(ethen-co-1-olefin-co-(meth)acrylsäure) sein, wobei das 1-Olefin ein Alken oder ein ungesättigter (Meth)acrylsäureester mit mehr als 4 Atomen sein kann, einschliesslich solchen Copolymeren, in denen die Säuregruppen teilweise mit Metallionen neutralisiert sind.

Bevorzugte Schlagzähmodifikatoren auf Basis von Styrolmonomeren (Styrol und Styrolderivate) und anderen vinylaromatischen Monomeren sind Blockcopolymere aufgebaut aus alkenylaromatischen Verbindungen und einem konjungierten Dien, sowie hydrierte Blockcopolymere aus einer alkenylaromatischen Verbindung und konjungierten Dienen oder Kombinationen dieser SZM-Typen. Das Blockcopolymer enthält mindestens einen Block abgeleitet von einer alkenylaromatischen Verbindung (A_{E}) und wenigstens einem Block abgeleitet von einem konjungierten Dien(B_{E}). Bei den hydrierten Blockcopolymeren wurde der Anteil an aliphatisch ungesättigten Kohlenstoff-Kohlenstoff-Doppelbindungen durch Hydrierung reduziert. Als Blockcopolymere sind Zwei-, Drei-, Vier- und Polyblockcopolymere mit linearer Struktur geeignet. Jedoch sind verzweigte und sternförmige Strukturen ebenfalls einsetzbar. Verzweigte Blockcopolymere erhält man in bekannter Weise, z.B. durch Pfropfreaktionen von polymeren "Seitenästen" auf eine Polymer-Hauptkette. Als alkenylaromatische Monomere können neben oder in Mischung mit Styrol, auch vinylaromatische Monomere verwendet werden, die am aromatischen Ring und/oder an der C=C-Doppelbindung mit C1-20-Kohlenwasserstoffresten oder Halogenatomen substituiert sind.

Beispiele für alkenylaromatische Monomere sind Styrol, p-Methylstyrol, α-Methylstyrol, Ethylstyrol, tert.-Butylstyrol, Vinyltoluol, 1,2-Diphenylethylen, 1,1-Diphenylethylen, Vinylxylole, Vinyltoluole, Vinylnaphthaline, Divinylbenzole, Bromstyrole, Chlorstyrole, sowie Kombinationen davon. Bevorzugt werden Styrol, p-Methylstyrol, alpha-Methylstyrol und Vinylnaphthalin.

Als Dienmonomere kommen z.B. 1,3-Butadien, 2-Methyl-1,3-butadien, 2,3-Dimethyl-1,3-butadien, 1,3-Pentadien, 1,3-Hexadien, Isopren, Chloropren und Piperylen in Betracht. 1,3-Butadien und Isopren sind bevorzugt, insbesondere 1,3-Butadien (nachfolgend kurz als Butadien bezeichnet).

Bevorzugt verwendet man als alkenylaromatisches Monomer Styrol und als Dienmonomer Butadien, d.h. bevorzugt ist das Styrol-Butadien-Blockcopolymer. In der Regel werden die Blockcopolymere durch anionische Polymerisation in an sich bekannter Weise hergestellt.

Weiterhin kann man zusätzlich zu den Styrol- und Dienmonomeren weitere Comonomere mitverwenden. Der Anteil der Comonomeren beträgt bevorzugt 0 bis 50, besonders bevorzugt 0 bis 30 und insbesondere 0 bis 15 Gew.-%, bezogen auf die Gesamtmenge der eingesetzten Monomeren. Geeignete Comonomere sind z.B. Acrylate, insbesondere C1-12-Alkylacrylate wie n-Butylacrylat oder 2-Ethylhexylacrylat, und die entsprechenden Methacrylate, insbesondere C1-12-Alkylmethacrylate wie Methylmethacrylat (MMA). Weitere mögliche Comonomere sind (Meth)acrylnitril, Glycidyl(meth)acrylat, Vinylmethylether, Diallyl- und Divinylether bifunktioneller Alkohole, Divinylbenzol und Vinylacetat.

Zusätzlich zum konjugierten Dien enthalten die hydrierten Blockcopolymere der Schlagzähmodifikatoren gegebenenfalls noch Anteile an niederen Kohlenwasserstoffen wie z.B. Ethylen, Propylen, 1-Buten, Dicyclopentadien oder nicht-konjugierte Diene. In den hydrierten Blockcopolymeren ist der Anteil der nicht reduzierten aliphatischen ungesättigten Bindungen, die aus dem Block B resultieren, kleiner 50%, bevorzugt kleiner 25%, insbesondere kleiner 10%. Die aromatischen Anteile aus Block A werden maximal zu 25% reduziert. Die hydrierten Blockcopolymere Styrol-(ethylen-butylen)-Zweiblock und Styrol-(ethylen-butylen)-styrol-Dreiblock-Copolymere werden durch Hydrierung von Styrol-butadien- und Styrol-butadien-styrol-Copolymeren erhalten. Die Blockcopolymere bestehen bevorzugt zu 20 bis 90 Gew.-% aus Block (A_{E}), insbesondere zu 50 bis 85 Gew.-% aus Block (A_{E}). Das Dien kann in 1,2- oder in 1,4-Orientierungen in den Block (B_{E}) eingebaut werden.

Beispiele für nicht-hydrierte Blockcopolymere sind Polystyrol-polybutadien, Polystyrol-poly(ethyen-propylen), Polystyrol-polyisopren, Poly(α-methylstyrol)-polybutadien, Polystyrene-polybutadien-polystyrol (SBS), Polystyrol-Poly(ethylene-propylen)-polystyrol, Polystyrol-polyisopren-polystyrol und Poly(α-methylstyrol-polybutadiene-poly(α-methylstyrol), als auch Kombinationen davon.

Geeignete nicht-hydrierte Blockcopolymere, die kommerziell erhältlich sind, sind verschiedene Produkte mit dem Markennamen SOLPRENE (Phillips), KRATON® (Shell), VECTOR® (Dexco) und SEPTON® (Kuraray).

Gemäß einer weiteren bevorzugten Ausführungsform sind die erfindungsgemäßen Formmassen dadurch gekennzeichnet, dass der Schlagzähmodifikator ein Polyolefinhomopolymeres oder ein Ethylen-α-Olefin-Copolymeres, insbesondere bevorzugt ein EP- und/oder EPDM-Elastomer (Ethylen-Propylen-Kautschuk respektive Ethylen-Propylen-Dien-Kautschuk), enthält. So kann es sich beispielsweise um ein Elastomer handeln, welches basiert auf einem Ethylen-C3-12- α -Olefin-Copolymer mit 20 bis 96, bevorzugt 25 bis 85 Gew.-% Ethylen, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und es sich insbesondere bevorzugt bei der Komponente C um Ethylen-Propylen-Kautschuk und/oder LLDPE und/oder VLDPE handelt.

Alternativ oder zusätzlich (beispielsweise in Mischung) kann der Schlagzähmodifikator ein Terpolymeres auf Basis von Ethylen-C3-12-α-Olefin mit einem unkonjugierten Dien enthalten, wobei dieses bevorzugtermassen 25 bis 85 Gew.-% Ethylen und bis maximal im Bereich von 10 Gew.-% eines unkonjugierten Diens enthält, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und/oder wobei das unkonjugierte Dien bevorzugt ausgewählt ist aus der Gruppe Bicyclo(2.2.1)heptadien, 1,4-Hexadien, Dicyclopentadien und/oder insbesondere 5-Ethylidennorbornen.

In Frage als Bestandteil für die Schlagzähmodifikatoren kommen zudem auch Ethylen-Acrylat-Copolymere. Weitere mögliche Formen als Bestandteile für die Komponente (III) sind die Ethylen-Butylen-Copolymere beziehungsweise Mischungen (Blends), welche derartige Systeme enthalten.

Bevorzugtermaßen verfügt der Schlagzähmodifikator über Bestandteile mit Säureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht, wobei dafür Reagenzien ausgewählt aus der folgenden Gruppe bevorzugtermassen eingesetzt werden: Maleinsäure, Maleinsäureanhydrid, Maleinsäuremonobutylester, Fumarsäure, Aconitsäure und/oder Itaconsäureanhydrid.

Vorzugsweise werden 0.1 bis 4.0 Gew.-% eines ungesättigten Anhydrids an die Schlagzähkomponente als Bestandteil des Schlagzähmodifikators aufgepfropft oder das ungesättigte Dicarbonsäureanhydrid oder dessen Vorstufe wird zusammen mit einem weiteren ungesättigten Monomeren aufgepfropft. Generell ist der Pfropfgrad bevorzugtermaßen in einem Bereich von 0.1-1.0%, insbesondere bevorzugt in einem Bereich von 0.3-0.7%. Auch möglich als Bestandteil der Komponente (IV) ist eine Mischung aus einem Ethylen-Propylen-Copolymer und einem Ethylen-Butylen-Copolymer, dies mit einem Maleinsäureanhydrid-Pfropfgrad (MAH-Propfgrad) im Bereich von 0.3-0.7%. Die oben angegebenen möglichen Systeme für die Komponente können auch in Mischungen verwendet werden.

Weiterhin kann der Schlagzähmodifikator über Bestandteile verfügen, welche über funktionelle Gruppen, wie z.B. Carbonsäure-, Ester-, Epoxy-, Oxazolin-, Carbodiimid-, Isocyanat-, Silanol- und Carboxylat-Gruppen verfügen, oder Kombinationen von zwei oder mehrerer der genannten funktionellen Gruppen enthalten. Monomere, die diese funktionellen Gruppen tragen, können durch Co-Polymerisation oder Pfropfung an das elastomere Polyolefin gebunden werden. Außerdemkönnen die SZM auf Basis der Olefinpolymere auch durch Pfropfung mit einer ungesättigten Silanverbindung, z. B. Vinyltrimethoxysilan, Vinyltriethoxysilan, Vinyltriacetosilan, Methacryloxypropyltrimethoxysilan oder Propenyltrimethoxysilan modifiziert sein.

Die elastomeren Polyolefine sind statistische, alternierende oder segmentierte Copolymere mit linearer, verzweigter oder Core-Shell-Struktur und enthalten funktionelle Gruppen, die mit den Endgruppen der Polyamide reagieren können, so dass eine ausreichende Verträglichkeit zwischen Polyamid und SZM resultiert.

Die eingesetzten SZM schließen damit Homopolymere oder Copolymere von Olefinen, wie z.B. Ethylen, Propylen, 1-Buten, oder Copolymere von Olefinen und copolymerisierbaren Monomeren, wie Vinylacetat, (Meth)acrylsäureester und Methylhexadien, ein.

Besonders bevorzugt werden folgende Olefinpolymere: Niedrig-, mittel- und hochdichte Polyethylene, Polypropylen, Polybutadien, Poly-4-methylpenten, Ethylen-Propylen-Block- oder statistische Copolymere, Ethylen-Methylhexadien-Copolymere, Propylen-Methylhexadien-Copolymere, Ethylen-Propylen-Buten-Copolymere, Ethylen-Propylen-Hexen-Copolymere, Ethylen-Propylen-Methylhexadien-Copolymere, Poly(ethylen-vinylacetat) (EVA), Poly(ethylen-ethylacrylat) (EEA), Ethylen-Octen-Copolymer, Ethylen-Buten-Copolymer, Ethylen-Hexen-Copolymer, Ethylen-Propylen-Dien-Terpolymere sowie Kombinationen der genannten Polymere. Insbesondere ist bevorzugt, wenn diese Olefinpolymere mit Säureanhydridgruppen funktionalisiert sind.

Beispiele für kommerziell erhältliche Schlagzähmodifier, welche im Rahmen der Bestandteile der Komponente (IV) eingesetzt werden können, sind: TAFMER MC201, TAFMER MH5010, TAFMER MH7010, TAFMER MH7020 von Mitsui Chemicals; EXXELOR VA1801, EXXELOR VA1803, EXXELOR VA1810, EXXELOR MDEX 94-11, Exxon Mobile Chemical; FUSABOND MN493D, FUSABOND A EB560D; ELVALOY, DuPont.

Bevorzugt wird auch ein Ionomer als Schlagzähmodifikator, in welchem die polymergebundenen Carboxylgruppen ganz oder teilweise durch Metallionen miteinander verbunden sind.

Besonders bevorzugt sind durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly-(ethen-co-(meth)arylsäure) oder Poly(ethen-co-1-olefin-co-(meth)acrylsäure), in denen die Säuregruppen teilweise mit Metallionen neutralisiert sind.

### Komponente (V)

Als optionale Komponente (V) enthalten die Mischungen der erfindungsgemäßen thermoplastischen Formmassen mindestens einen Hitzestabilisator (oder synonym Wärmestabilisator), bevorzugt in einer Konzentration von 0.1 bis 2.0 Gew.-%, besonders bevorzugt von 0.15 bis 1.8 Gew.-% oder 0.2 bis 1.5 Gew.-%.

In einer bevorzugten Ausführungsform sind die Wärmestabilisatoren ausgewählt aus der Gruppe bestehend aus
- Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, CuI, CuCN und Cu₂O, sowie die zweiwertigen Kupferverbindungen CuCl₂, CuSO₄, CuO, Kupfer(II)acetat oder Kupfer(II)stearat. Sofern eine Kupferverbindung verwendet wird, beträgt vorzugsweise die Menge an Kupfer 0.02 bis 0.5, insbesondere 0.03 bis 0.35 und besonders bevorzugt 0.05 bis 0.25 Gew.-%, bezogen auf die Summe der anderen Komponenten, d.h. bezogen auf die gesamte Polyamidformmasse.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise gleicher chemischer Natur wie die Polyamide (A) oder (B), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie NaI, Kl, NaBr, KBr, eingesetzt, wobei das molare Verhältnis von Metallhalogenid zu Kupferhalogenid 0.5 bis 20, bevorzugt 1 bis 10 und besonders bevorzugt 3 bis 7 beträgt.
- Stabilisatoren auf Basis sekundärer aromatischer Amine, wobei diese Stabilisatoren vorzugsweise in einer Menge von 0.2 bis 2.0, bevorzugt von 0.2 bis 1.5 Gew.-% vorliegen,
- Stabilisatoren auf Basis sterisch gehinderter Phenole, wobei diese Stabilisatoren vorzugsweise in einer Menge von 0.1 bis 1.5, bevorzugt von 0.2 bis 1.0 Gew.-% vorliegen, und
- Phosphiten und Phosphoniten, sowie
- Mischungen der vorstehend genannten Stabilisatoren.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolen, Naugard 445, N,N'-Dinaphthyl-p-phenylendiamin, N-Phenyl-N'-cyclohexyl-p-phenylendiamin oder Mischungen von zwei oder mehreren davon Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4-4'-Butyliden-bis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylphentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritol-diphosphit, Tristearylsorbitoltriphosphit, Tetrakis-(2,4-di-tert-butylphenyl)-4,4'-biphenylendiphospho-nit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis-(2,4-di-tert-butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit.

Insbesondere bevorzugt wird eine Wärmestabilisierung ausschließlich auf Basis von CuI und Kl. Neben dem Zusatz von Kupfer oder Kupferverbindungen können noch weitere Übergangsmetallverbindungen, insbesondere Metallsalze oder Metalloxide der Gruppe VB, VIB, VIIB oder VIIIB des Periodensystems verwendet werden. Darüber hinaus werden der erfindungsgemäßen Formmasse bevorzugt Übergangsmetalle der Gruppe VB, VIB, VIIB oder VIIIB des Periodensystems, wie z.B. Eisen- oder Stahlpulver, zugesetzt.

Generell gesprochen handelt es sich also gemäß einer weiteren bevorzugten Ausführungsform bei der Komponente (V), welche vorzugsweise in der Formmasse in einem Anteil im Bereich von 0.1-2.0 Gew.-%, bevorzugt im Bereich von 0.20-1.5 Gew.-% vorliegt, um ein System ausgewählt ist aus der folgenden Gruppe: Verbindungen des ein- oder zweiwertigen Kupfers, Stabilisatoren auf Basis sekundärer aromatischer Amine, Stabilisatoren auf Basis sterisch gehinderter Phenole, Phosphite, Phosphonite, sowie Mischungen davon.

Bevorzugte organische Stabilisatoren sind Phenol- und/oder Phosphit-Verbindungen, wie z.B. Irganox 245, Irganox 1010, Irganox 1098, Hostanox PAR 24, Anox 20 oder Irgafos 168. Besonders bevorzugt wird Irganox 1010 in einer Konzentration von gleich oder kleiner 0.5 Gew.-%.

### Komponente (VI)

Die Mischung der Polyamidformmasse enthält optional in Form von Komponente (VI) auch weitere Hilfsstoffe und/oder Additive, verschieden von den anderen Komponenten (I) bis (V), in einem Anteil von höchstens 6.0 Gew.-%.

Gemäß einer bevorzugten Ausführungsform liegt die Komponente (VI) in einem Anteil, bezogen auf die gesamte Polyamidformmasse, im Bereich 0.1-4.0 Gew.-%, insbesondere bevorzugt im Bereich von 0.2-3.0 Gew.-%, vor.

Bevorzugtermaßen ist die Komponente (VI) ausgewählt aus der folgenden Gruppe: Kristallisations-Beschleuniger oder -Verzögerer, Fließhilfsmittel, Gleitmittel, Entformungsmittel, Pigmente, Farbstoff- und Markierungsstoffe, Verarbeitungshilfsmittel, Antistatika, Ruß, Graphit, Kohlenstoffnanoröhrchen, Residuen aus Polymerisationsverfahren wie Katalysatoren, Salze und deren Derivate, Antioxidantien, Antiozonantien, Lichtschutzmitteln, UV-Stabilisatoren, UV-Absorbern oder UV-Blockern, IR-Absorbern, NIR-Absorbern, Antiblockmitteln, Nukleierungsmitteln, Kettenreglern, Entschäumern, kettenverlängernden Additiven, Leitfähigkeitsadditiven, Trennmitteln, organischen Pigmenten, Ruß, Graphit, Graphen, photochromen Agenzien, Entformungsmitteln, optischen Aufhellern, sowie Mischungen und Kombinationen hieraus.

Die Komponenten (II) bis (VI) können jeweils auch in Masterbatchform zugegeben werden. Bevorzugt wird als Basispolymer des Masterbatches ein Polyamid verwendet. Das hierfür verwendete Polyamid ist insbesondere ein Polyamid (A) der Komponenten (I).

Erfindungsgemäß werden ebenso Formkörper bereitgestellt, die aus den zuvor beschriebenen Formmassen herstellbar sind. Diese Formkörper liegen vorzugsweise in Form eines Bauteils vor, das zum Beispiel im Automobil, insbesondere im Innenraum, im Sanitärbereich, insbesondere für Heisswasseranwendungen, im Haushaltsbereich, insbesondere für Kaffeemaschinen, Wasserkocher, Tauchsieder, Geschirrspülmaschinen, Waschmaschinen, in der Mess-, Regelungs- und Steuertechnik, insbesondere für Aktuatoren, Sensoren, Getriebe, Druckluftsteuerungen, Ventile, sowohl für Hydraulik als auch Pneumatik oder im Maschinenbau einsetzbar ist.

Anhand der nachfolgenden Beispiele soll der erfindungsgemäße Gegenstand näher erläutert werden, ohne diesen auf die hier dargestellten spezifischen Ausführungsformen einschränken zu wollen.

### Beispiele

Im Rahmen dieser Anmeldung wurden folgende Messmethoden verwendet:
Die Messungen wurden nach folgenden Normen und an folgenden Prüfkörpern durchgeführt:
Prüfkörper im trockenen Zustand werden nach dem Spritzguss mindestens 48 h bei Raumtemperatur in trockener Umgebung, d.h. über Silicagel gelagert. Konditionierte Prüfkörper werden nach ISO 1110 für 14 Tage bei 72 °C und 62 % relativer Feuchte gelagert.

Das **thermische Verhalten** (Schmelzpunkt (Tₘ), Schmelzenthalpie (ΔHₘ), Glasübergangstemperatur (T_{g})) wurde anhand der ISO-Norm 11357-1, -2 und -3 (2013-04) am Granulat bestimmt. Die Differential Scanning Calorimetry (DSC) wurde mit Aufheizrate von 20 K /min durchgeführt.

Die **relative Viskosität** (ηᵣₑₗ) wurde bestimmt nach DIN EN ISO 307 (2013-08) an Lösungen von 0.5 g Polymer gelöst in 100 ml *m*-Kresol bei einer Temperatur von 20 °C. Als Probe wird Granulat verwendet.

**Zug-E-Modul, Bruchspannung und Bruchdehnung:** Zug-E-Modul, Bruchspannung und Bruchdehnung wurden nach ISO 527 (2012-06) mit einer Zuggeschwindigkeit von 1 mm/min (Zug-E-Modul) bzw. mit einer Zuggeschwindigkeit von 5 mm/min (Bruchspannung, Bruchdehnung) am ISO-Zugstab, Norm ISO/CD 3167 (2014-11), Typ Al, 170 x 20/10 x 4 mm bei Temperatur 23 °C, 80 °C und 100 °C im trockenen und konditionierten Zustand bestimmt.

Die **Wärmeformbeständigkeit** HDT/A (1.8 MPa) und HDT/C (8.0 MPa) wurde gemäss DIN EN ISO 75-1,-2 (2013-04) am ISO-Schlagstab mit der Dimension 80x10x4 mm in Flachkantposition durchgeführt.

**Wasseraufnahme:** ISO-Zugstäbe wurden bei einer Temperatur von 95 °C für die Dauer von 336 Stunden in Wasser gelagert. Nach Abtrocknen der Oberfläche mit einem Baumwolltuch wurde die prozentuale Gewichtszunahme in Bezug auf das Ausgangsgewicht (trockner ISO-Zugstab) bestimmt.

Die Herstellung der Copolyamide, der Formmassen und der Formkörper erfolgte gemäß den folgenden Syntheseverfahren.

### Herstellung des Polyamids PA-1 (6T/BACT/66/BAC6)

In einem 20 I Autoklaven wurden 3.48 kg deionisiertes Wasser vorgelegt und 2.46 kg 1,6- Hexandiamin (Ba1), 1.00 kg 1,3-Bis(aminomethyl)-cyclohexan (Ba2), 4.20 kg Terephthalsäure (Bb1), 0.32 kg Adipinsäure (Bb3) und 4.48 g Phosphinsäure (50 Gew.-%-ige wässerige Lösung) als Kondensationskatalysator und 3.2 g Antifoam RD 10 Gew.-% Emulsion als Entschäumer zugegeben. Danach wurde sechsmal mit Stickstoff inertisiert. Unter Rühren wurde auf die Reaktionstemperatur von 260 °C aufgeheizt. Dies erfolgte bei einem Druck von 32 bar. Der Ansatz wurde in der Druckphase für 1.5 Stunden auf der Reaktionstemperatur gehalten und anschliessend mit Dampf über eine Düse ausgetragen. Das Vorkondensat wurde 24 Stunden bei 110 °C und einem Vakuum von 30 mbar getrocknet.

Das Vorkondensat wurde in einem zweiwelligen Extruder der Firma Werner & Pfleiderer Typ ZSK 25 nachkondensiert. Dazu wurden in den ersten 4 Zonen Zylindertemperaturen von 10 bis 80 °C eingestellt, in den restlichen Zonen wurden Zylindertemperaturen von 300 bis 360 °C in einem aufsteigenden und wieder absteigenden Temperaturprofil verwendet. Die Schmelze wurde in der zweiten Zone vor der Düse durch einen Stickstoffstrom entgast. Die Schneckendrehzahl betrug 250 U/min, der Durchsatz 6 kg/h. Das Polyamid wurde als Strang durch eine Düse ausgetragen, wobei eine Düsentemperatur von 330 °C eingestellt war. Der Strang wurde in einem Wasserbad bei 80 °C abgekühlt und anschliessend granuliert. Das Granulat wurde 24 bei 120 °C bei vermindertem Druck (30 mbar) auf einen Wassergehalt von unter 0.1 Gew.-% getrocknet.

Die Polyamide PA-4 und PA-5 wurden gemäss EP 1930 372 A2 hergestellt. PA-5 entspricht dabei dem Vergleichsbeispiel 10.

Für die in Tabellen 2 und 3 untersuchten Polyamidformmassen wurden die in der Tabelle 1 gelisteten Polyamide verwendet.

**Tabelle 1 - verwendete Polyamide**

| **Bezeichnung** | **Polymer** | **Zusammensetzung (Mol-%)** | **T_{g} [°C]** | **Tₘ [°C]** | **ηᵣₑₗ** |
|---|---|---|---|---|---|
| Komponente (A) | | | | | |
| PA 66 | RADIPOL A45 | | | 260 | 1.85 |
| PA 6 | GRILON F34 | | | 222 | 2.05 |
| PA 610 | Polyamid PA610 | | | 225 | 1.95 |
| PA 1010 | Polyamid PA1010 | | | 220 | 1.75 |
| PA 46 | STANYL TE300 NAT. | | | 294 | 2.00 |
| PA 12 | GRILAMID L25 NAT. | | | 178 | 2.25 |

| Komponente (B) | | | | | |
|---|---|---|---|---|---|
| PA-1 | 6T/BACT/66/BAC6 | 68.5/23.5/6/2 | 150 | 325 | 1.62 |
| PA-2 | 6I/6T (Grivory G21, EMS-CHEMIE, Schweiz) | 67/33 | 125 | - | 1.52 |
| PA-3 | 6T/6I (Grivory HTXE 3733 NK, EMS-CHEMIE, Schweiz) | 70/30 | 135 | 325 | 1.59 |
| PA-4 | 6I/6T/MACMI/MACMT/ PACM I/PACMT/12 | 40/40/6.5/6.5/2/2/3 | 160 | - | 1.61 |
| PA-5 | 6I/MACMI/6T/MACMT | 76.5/13.5/8.5/1.5 | 148 | - | 1.46 |

### Herstellung der Polyamidformmassen

Die in den Tabellen 1 bis 3 angegebenen Komponenten wurden in den oben erwähnten Konzentrationen in einem zweiwelligen Extruder der Firma Werner und Pfleiderer mit einem Schneckendurchmesser von 25 mm bei vorgegebenen Prozessparametern (Zylindertemperaturen: aufsteigend von 260 bis 290 °C; Drehzahl: 250 U/min; Durchsatz: 12 kg/h) compoundiert. Die Polyamide der Komponenten A und B sowie die Hitzestabilisierung wurden hierbei in die Einzugszone dosiert, während die Glasfasern über einen Sidefeeder 3 Gehäuseeinheiten vor der Düse in die Polymerschmelze eindosiert wurden. Die Compounds wurden als Strang aus einer Düse mit 3 mm Durchmesser abgezogen und nach Wasserkühlung granuliert. Das Granulat wurde 24 Stunden bei 110 °C im Vakuum bei 30 mbar getrocknet.

Die Compounds wurden so dann mit einer Spritzgussmaschine Arburg Allrounder 320-210-750 zu Probekörpern bei Zylindertemperaturen von 280 bis 315 °C und einer Werkzeugtemperatur von 110 bis 150 °C verspritzt.

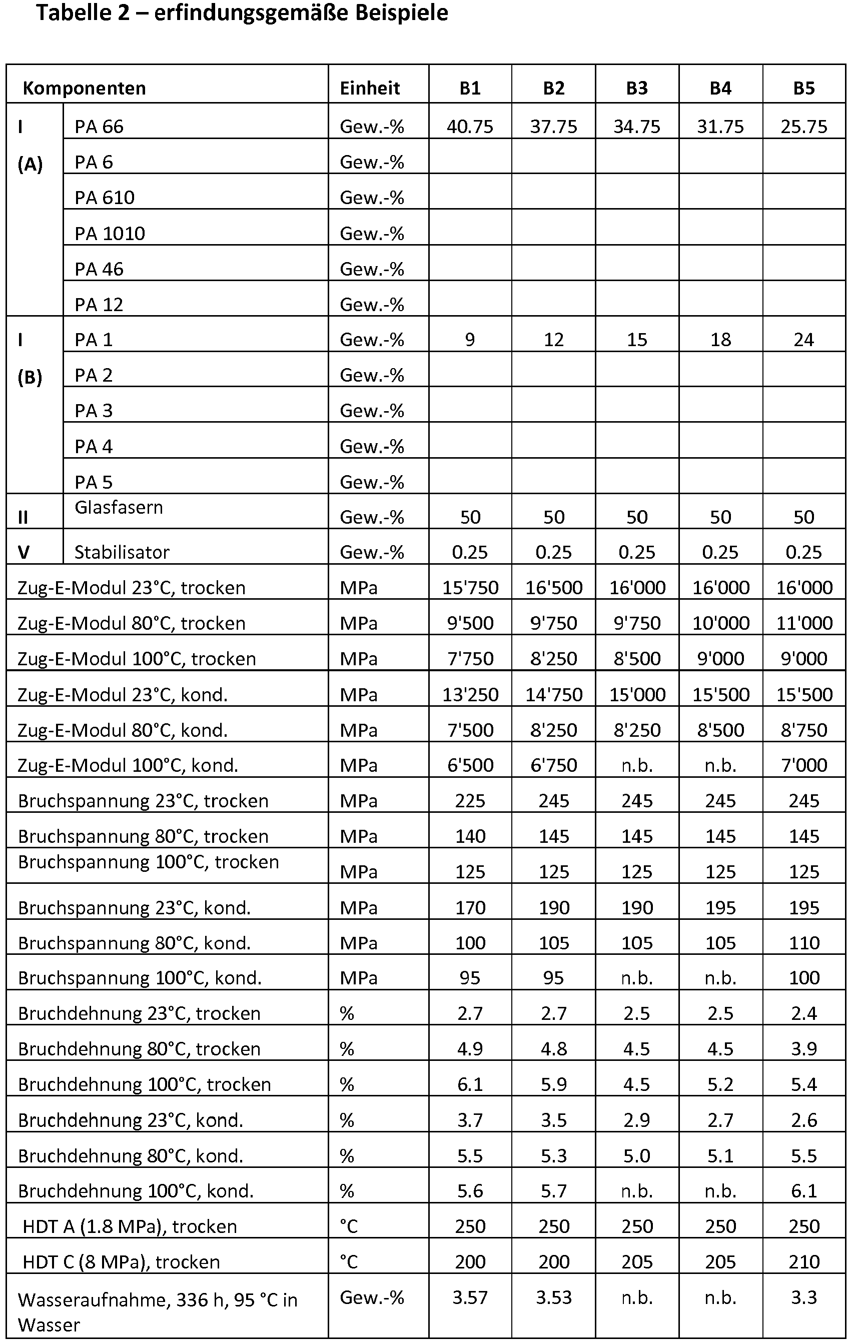

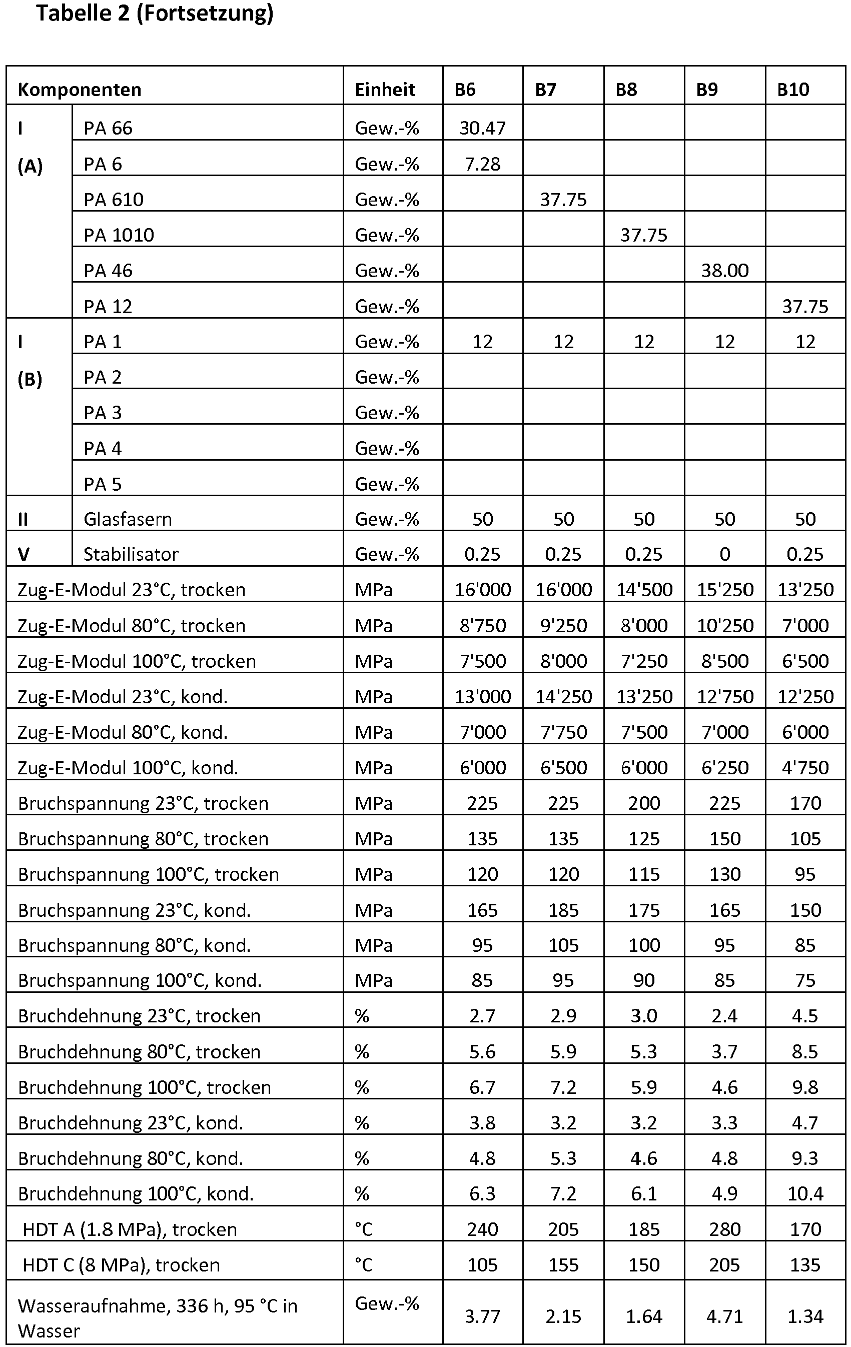

**Tabelle 3 (Vergleichsbeispiele)**

| **Komponenten** | | **Einheit** | **VB1** | **VB2** | **VB3** | **VB4** | **VB5** |
|---|---|---|---|---|---|---|---|
| **I (A)** | PA 66 | Gew.-% | 37.75 | 37.75 | 37.75 | 37.75 | 49.75 |
| | PA 6 | Gew.-% | | | | | |
| | PA 610 | Gew.-% | | | | | |
| | PA 1010 | Gew.-% | | | | | |
| | PA 46 | Gew.-% | | | | | |
| | PA 12 | Gew.-% | | | | | |
| **I (B)** | PA 1 | Gew.-% | | | | | |
| | PA 2 | Gew.-% | 12 | | | | |
| | PA 3 | Gew.-% | | 12 | | | |
| | PA 4 | Gew.-% | | | 12 | | |
| | PA 5 | Gew.-% | | | | 12 | |
| **II** | Glasfasern | Gew.-% | 50 | 50 | 50 | 50 | 50 |
| **V** | Stabilisator | Gew.-% | 0.25 | 0.25 | 0.25 | 0.25 | 0.25 |
| Zug-E-Mdul 23°C, trocken | | MPa | 15'500 | 16'250 | 15'250 | 15'500 | 15'750 |
| Zug-E-Modul 80°C, trocken | | MPa | 8'250 | 8'750 | 8'500 | 7'750 | 8'000 |
| Zug-E-Modul 100°C, trocken | | MPa | 5'750 | 7'750 | 6'750 | n.b. | n.b. |
| Zug-E-Modul 23°C, kond. | | MPa | 14'500 | 14'500 | 14'750 | 15'250 | 12'750 |
| Zug-E-Modul 80°C, kond. | | MPa | 6'250 | 6'750 | 6'750 | n.b. | 6750 |
| Zug-E-Modul 100°C, kond. | | MPa | 4'250 | 5'000 | 5'000 | n.b. | n.b. |
| Bruchspannung 23°C, trocken | | MPa | 225 | 230 | 220 | 210 | 225 |
| Bruchspannung 80°C, trocken | | MPa | 125 | 130 | 130 | 125 | 145 |
| Bruchspannung 100°C, trocken | | MPa | 105 | 120 | 120 | n.b. | n.b. |
| Bruchspannung 23°C, kond. | | MPa | 165 | 175 | 180 | 180 | 165 |
| Bruchspannung 80°C, kond. | | MPa | 75 | 95 | 100 | n.b. | 100 |
| Bruchspannung 100°C, kond. | | MPa | 70 | 85 | 80 | n.b. | n.b. |
| Bruchdehnung 23°C, trocken | | % | 2.8 | 2.4 | 2.8 | 2.6 | 2.9 |
| Bruchdehnung 80°C, trocken | | % | 6.4 | 5.3 | 6.2 | 6.5 | 5.4 |
| Bruchdehnung 100°C, trocken | | % | n.b. | 6.6 | 7.4 | n.b. | n.b. |
| Bruchdehnung 23°C, kond. | | % | 3.3 | 3.5 | 3.2 | 3.4 | 4.0 |
| Bruchdehnung 80°C, kond. | | % | 7.4 | 6.5 | 6.9 | n.b. | 5.1 |
| Bruchdehnung 100°C, kond. | | % | n.b. | 7.0 | 7.4 | n.b. | n.b. |
| HDT A (1.8 MPa), trocken | | °C | 230 | 235 | 235 | 230 | 240 |
| HDT C (8 MPa), trocken | | °C | 145 | 180 | 160 | 140 | 200 |
| Wasseraufnahme, 336 h, 95 °C in Wasser | | Gew.-% | 3.74 | 3.61 | 3.7 | n.b. | 4 |

| | |
|---|---|
| Glasfasern | VETROTEX 995 EC10-4.5, runde Glasfasern mit einem Durchmesser von 10 m und einer Länge von 4.5 mm, Ownes Corning |
| Stabilisator | Irganox 1010 (gehindertes Phenol, CAS: 6683-19-8) |

Die erfindungsgemäßen Beispiele beinhalten als teilaromatisches, teilkristallines Polyamid ein Polyamid das teilkristalline, teilaromatische Polyamid PA 6T/BACT/66/BAC6, das gemäß der oben angegebenen Verfahrensvorschrift hergestellt wurde. Dieses Polyamid entspricht dem Polyamid (B) der als Komponente (I) in der Polyamidformmasse enthaltenen Polyamidmischung.

Die Vergleichsbeispiele enthalten zwar ebenso teilaromatische Polyamide, diese entsprechen allerdings nicht den erfindungsgemäßen Polyamiden (B).

Überraschenderweise zeigt sich, dass eine Erhöhung der Konzentration von PA-1 als Komponente (B) (Beispiel B1-B5), mit T_{g} = 150 °C und Tₘ = 325 °C, eine stetige Verbesserung der Steifigkeit bis 100 °C trocken und konditioniert bewirkt und die Wasseraufnahme gegenüber reinem PA 66 (VB5) kontinuierlich verringert. Dabei nimmt die Bruchdehnung bei 23 °C nur geringfügig ab. Noch höhere Konzentrationen an Komponente (B) würden dann allerdings die Verarbeitbarkeit erschweren und die die Sprödigkeit weiter zunehmen lassen. Verschiedene amorphe Polyamide als Komponente (B) (VB1, VB3 und VB4) mit einem T_{g} von 125-160 °C zeigten hier, wenn überhaupt, nur geringfügige Verbesserungen in der Steifigkeit bzw. Wasseraufnahme. Ebenso konnte in VB2 mit einem teilaromatischen, teilkristallinen Polyamid (T_{g} = 135 °C und Tₘ = 325 °C) kaum Verbesserungen festgestellt werden.

Die Beispiele B6-B10 zeigen, dass PA-1 als Komponente (B) auch mit zahlreichen anderen teilkristallinen, aliphatischen Polyamiden kompatibel ist und die Steifigkeit bis 100 °C trocken und konditioniert unter weitgehendem Erhalt der Bruchdehnung bei 23 °C verbessert. Des Weiteren wird besonders bei kurzkettigen aliphatischen Polyamiden (B9) die Wasseraufnahme deutlich reduziert.

## Patentansprüche

1. Polyamidformmasse, enthaltend oder bestehend aus zu:
(I) 30 bis 100 Gew.-% einer Mischung aus
(A) 52 bis 88 Gew.-% mindestens einem teilkristallinen, aliphatischen Polyamid; sowie
(B) 12 bis 48 Gew.-% mindestens einem teilkristallinen, teilaromatischen Polyamid, gebildet aus einer Diaminkomponente (Ba), einer Dicarbonsäurekomponente (Bb) und gegebenenfalls einer Lactam- und/oder ω-Aminosäurekomponente (Bc), wobei die Diaminkomponente (Ba) in einem molaren Verhältnis von 1.03:1 bis 1:1.03 zu der Dicarbonsäurekomponente (Bb) eingesetzt wird, die Menge der Lactam- und/oder ω-Aminosäurekomponente (Bc) 0 bis 15 Mol-% und die Summe der Komponenten (Ba) bis (Bc) 100 Mol-% beträgt und wobei die Diaminkomponente (Ba) aus
(Ba1) 62 bis 96 Mol-Anteilen 1,6-Hexandiamin,
(Ba2) 4 bis 38 Mol-Anteilen Bis(aminomethyl)-cyclohexan sowie
(Ba3) 0 bis 30 Mol-Anteilen eines oder mehrerer von (Ba2) verschiedener cycloaliphatischer Diamine besteht,
wobei die Summe von (Ba2) und (Ba3) 4 bis 38 Mol-Anteile und die Summe von (Ba1), (Ba2) und (Ba3) 100 Mol-Anteile beträgt,
Dicarbonsäurekomponente (Bb) aus
(Bb1) 64 bis 100 Mol-Anteilen Terephthalsäure,
(Bb2) 0 bis 18 Mol-Anteilen Isophthalsäure sowie
(Bb3) 0 bis 18 Mol-Anteilen einer oder mehrerer aliphatischer Dicarbonsäuren mit 6 bis 18 C-Atomen besteht,
wobei die Summe von (Bb1), (Bb2) und (Bb3) 100 Mol-Anteile beträgt, und
die Lactam- und/oder ω-Aminosäurekomponente (Bc) aus einem oder mehreren Lactamen und/oder ω-Aminosäuren besteht, wobei die Summe der Lactame und/oder ω-Aminosäuren 100 Mol-Anteile beträgt,
wobei die Anteile von (A) und (B) bezogen sind auf die Summe der eingesetzten Polyamide (A) und (B) und in der Summe 100 Gew.-% der Mischung ausmachen,
(II) 0-70 Gew.-% faserförmige Verstärkungsstoffe;
(III) 0 - 30 Gew.-% partikuläre Füllstoffe verschieden von (II), (IV) bis (VI);
(IV) 0-20 Gew.-% Schlagzähmodifikatoren;
(V) 0 - 2.0 Gew.-% Hitzestabilisatoren;
(VI) 0 - 6 Gew.-% Hilfsstoffe und/oder Additive, verschieden von (I)-(V);
wobei die Summe der Komponenten (I)-(VI) 100 Gew.-% der Polyamidformmasse ausmacht.

2. Polyamidformmasse nach Anspruch 1, **dadurch gekennzeichnet, dass** das mindestens eine teilkristalline, aliphatische Polyamid (A) ausgewählt ist aus der Gruppe bestehend aus Polyamid 46, Polyamid 6, Polyamid 56, Polyamid 66, Polyamid 11, Polyamid 12, Polyamid 1212, Polyamid 1010, Polyamid 1012, Polyamid 1112, Polyamid 610, Polyamid 106, Polyamid 612, Polyamid 614, Polyamid 616, Polyamid 516, Polyamid 618, Polyamid 69, Polyamid 810, deren Copolyamide oder deren Gemische, Blends oder Legierungen.

3. Polyamidformmasse nach einem der vorhergehenden Ansprüche **dadurch gekennzeichnet, dass** das die Mischung (I)
(A) 60 bis 85 Gew.-%, bevorzugt 68 bis 82 Gew.-% des mindestens einen teilkristallinen, aliphatischen Polyamids; sowie
(B) 15 bis 40 Gew.-%, bevorzugt 18 bis 32 Gew.-% des mindestens einen teilkristallinen, teilaromatischen Polyamids enthält.

4. Polyamidformmasse nach einem der vorhergehenden Ansprüche **dadurch gekennzeichnet, dass** das mindestens eine teilkristalline, aliphatische Polyamid (A) eine Lösungsviskosität ηᵣₑₗ, gemessen in m-Kresol (0.5 g Polymer in 100 ml m-Kresol, 20 °C) im Bereich von 1.5 bis 3.0, bevorzugt im Bereich von 1.6 bis 2.6, insbesondere im Bereich von 1.7 bis 2.3 aufweist.

5. Polyamidformmasse nach einem der vorhergehenden Ansprüche, **dadurch gekennzeichnet, dass** die Diaminkomponete (Ba) aus
(Ba1) 65 bis 90 Mol-Anteilen 1,6-Hexandiamin,
(Ba2) 10 bis 35 Mol-Anteilen Bis(aminomethyl)-cyclohexan sowie
(Ba3) 0 bis 25 Mol-Anteilen eines oder mehrerer von A2) verschiedener cycloaliphatischer Diamine
ausgewählt ist, wobei die Summe von (Ba2) und (Ba3) 10 bis 35 Mol-Anteile und die Summe von (Ba1), (Ba2) und (Ba3) 100 Mol-Anteile beträgt.

6. Polyamidformmasse nach einem der vorhergehenden Ansprüche, **dadurch gekennzeichnet, dass** die Diaminkomponete (Ba) aus
(Ba1) 70 bis 82 Mol-Anteilen 1,6-Hexandiamin,
(Ba2) 18 bis 30 Mol-Anteilen Bis(aminomethyl)-cyclohexan sowie
(Ba3) 0 bis 12 Mol-Anteilen eines oder mehrerer von A2) verschiedener cycloaliphatischer Diamine
ausgewählt ist, wobei die Summe von (Ba2) und (Ba3) 18 bis 30 Mol-Anteile und die Summe von (Ba1), (Ba2) und (Ba3) 100 Mol-Anteile beträgt.

7. Polyamidformmasse nach einem der vorhergehenden Ansprüche, **dadurch gekennzeichnet, dass** die Dicarbonsäurekomponente (Bb) aus
(Bb1) 70 bis 100 Mol-Anteilen Terephthalsäure,
(Bb2) 0 bis 15 Mol-Anteilen Isophthalsäure sowie
(Bb3) 0 bis 15 Mol-Anteilen einer oder mehrerer aliphatischer Dicarbonsäuren mit 6 bis 18 C-Atomen
ausgewählt ist und die Summe von (Bb1), (Bb2) und (Bb3) 100 Mol-Anteile beträgt.

8. Polyamidformmasse nach einem der vorhergehenden Ansprüche, **dadurch gekennzeichnet, dass** die Dicarbonsäurekomponente (Bb) aus
(Bb1) 80 bis 100 Mol-Anteilen Terephthalsäure,
(Bb2) 0 bis 10 Mol-Anteilen Isophthalsäure sowie
(Bb3) 0 bis 10 Mol-Anteilen einer oder mehrerer aliphatischer Dicarbonsäuren mit 6 bis 18 C-Atomen
ausgewählt ist und die Summe von (Bb1), (Bb2) und (Bb3) 100 Mol-Anteile beträgt.

9. Polyamidformmasse nach einem der vorhergehenden Ansprüche, **dadurch gekennzeichnet, dass** die Menge der Lactam- und/oder ω-Aminosäurekomponente (Bc) 0 bis 10 Mol-%, bevorzugt 0 bis 5 Mol-% beträgt.

10. Polyamidformmasse nach einem der vorhergehenden Ansprüche, **dadurch gekennzeichnet, dass** die Summe der Mol-Anteile von (Ba2) Bis(aminomethyl)-cyclohexan, (Ba3) cycloaliphatischem Diamin, (Bb2) Isophthalsäure und (Bb3) aliphatischer Dicarbonsäure maximal 38 Mol-Anteile, bevorzugt maximal 35 Mol-Anteile, besonders bevorzugt maximal 30 Mol-Anteile beträgt.

11. Polyamidformmasse nach einem der vorhergehenden Ansprüche, **dadurch gekennzeichnet, dass**
die Diaminkomponente (Ba) aus
(Ba1) 65 bis 85 Mol-Anteilen 1,6-Hexandiamin,
(Ba2) 15 bis 35 Mol-Anteilen Bis(aminomethyl)-cyclohexan, insbesondere 1,3-Bis(aminomethyl)-cyclohexan, ausgewählt ist
wobei die Summe von (Ba1) und (Ba2) 100 Mol-Anteile beträgt und/oder
die Dicarbonsäurekomponente (Bb) aus
(Bb1) 80 bis 100 Mol-Anteilen Terephthalsäure,
(Bb3) 0 bis 20 Mol-Anteilen einer oder mehrerer aliphatischer Dicarbonsäuren mit 6 bis 18 C-Atomen, insbesondere 6 bis 12 C-Atomen ausgewählt ist und
wobei die Summe von (Bb1) und (Bb3) 100 Mol-Anteile beträgt.

12. Polyamidformmasse nach einem der vorhergehenden Ansprüche, **dadurch gekennzeichnet, dass** das mindestens eine teilkristalline, teilaromatische Polyamid (B)
eine Glasübergangstemperatur, gemessen nach ISO 11357-1 und ISO 11357-2 (2013-04) von mindestens 140 °C, bevorzugt von mindestens 145 °C, besonders bevorzugt von mindestens 150 °C,
eine Schmelztemperatur, gemessen nach ISO 11357-1 und ISO 11357-3 (2013-04) von höchstens 340 °C, bevorzugt von höchstens 335 °C, besonders bevorzugt von 300 bis 330 °C,
ein Elastizitätsmodul, gemessen nach ISO 527 (2012-06) mit einer Zuggeschwindigkeit von 1 mm/min (Zug-E-Modul) am ISO-Zugstab, Norm ISO/CD 3167 (2014-11), Typ Al, 170 x 20/10 x 4 mm bei Temperatur 23 °C, 80 °C und 100 °C im trockenen und konditionierten Zustand zwischen 2400 und 4200 MPa, bevorzugt 2500 bis 4000 MPa, besonders bevorzugt 2600 bis 3900 MPa und/oder
eine relative Viskosität, gemessen nach DIN EN ISO 307 (2013-08) bei 20 °C und einer Konzentration von 0.5 g/dl in m-Kresol, von 1.45 bis 1.95, bevorzugt 1.50 bis 1.75, besonders bevorzugt 1.55 bis 1.68 aufweist.

13. Polyamidformmasse nach einem der vorhergehenden Ansprüche, **dadurch gekennzeichnet, dass** der Gehalt der Komponenten unabhängig voneinander
(I) von 35 bis 84.9 Gew.-%, bevorzugt von 40 bis 79.8 Gew.-%, besonders bevorzugt 40 bis 69.8 Gew.-%
(II) von 15 bis 60 Gew.-%, bevorzugt von 20 bis 55 Gew.-%, besonders bevorzugt 30 bis 50 Gew.-%
(III) höchstens 20 Gew.-%, vorzugsweise im Bereich von höchstens 10 Gew.-%, insbesondere im Bereich von 0.1-5.0 Gew.-%
(IV) 0 Gew.-% (frei von Schlagzähmodifikatoren) oder zwischen 5 und 15 Gew.-%, insbesondere von 5 bis 12 Gew.-%,
(V) von 0.1 bis 2.0 Gew.-%, bevorzugt von 0.15 bis 1.8 Gew.-%, besonders bevorzugt von 0.2 bis 1.5 Gew.-%, und/oder
(VI) höchstens 6.0 Gew.-%, bevorzugt 0.1-4.0 Gew.-%, insbesondere von 0.2-3.0 Gew.-%,
beträgt.

14. Formkörper hergestellt aus einer Polyamidformmasse nach einem der vorhergehenden Ansprüche, bevorzugt in Form eines Bauteils zum Beispiel im Automobil, insbesondere im Innenraum, im Sanitärbereich, insbesondere für Heisswasseranwendungen, im Haushaltsbereich, insbesondere für Kaffeemaschinen, Wasserkocher, Tauchsieder, Geschirrspülmaschinen, Waschmaschinen, in der Mess-, Regelungs- und Steuertechnik, insbesondere für Aktuatoren, Sensoren, Getriebe, Druckluftsteuerungen, Ventile, sowohl für Hydraulik als auch Pneumatik oder im Maschinenbau.

## Claims

1. Polyamide moulding compound, comprising or consisting of up to:
(I) 30 to 100% by weight of a mixture made of
(A) 52 to 88% by weight of at least one partially crystalline, aliphatic polyamide; and also
(B) 12 to 48% by weight of at least one partially crystalline, partially aromatic polyamide, formed from a diamine component (Ba), a dicarboxylic acid component (Bb) and possibly a lactam- and/or ω-amino acid component (Bc), the diamine component (Ba) being used in a molecular ratio of 1.03:1 to 1:1.03 to the dicarboxylic acid component (Bb), the quantity of lactam- and/or ω-amino acid component (Bc) being 0 to 15% by mol and the sum of components (Ba) to (Bc) being 100% by mol, wherein the
diamine component (Ba) consisting of
(Ba1) 62 to 96 mol-parts of 1,6-hexanediamine,
(Ba2) 4 to 38 mol-parts of bis(aminomethyl)cyclohexane, and also
(Ba3) 0 to 30 mol-parts of one or more cycloaliphatic diamines, different from (Ba2),
the sum of (Ba2) and (Ba3) being 4 to 38 mol-parts and the sum of (Ba1), (Ba2) and (Ba3) being 100 mol-parts,
dicarboxylic acid component (Bb) consisting of
(Bb1) 64 to 100 mol-parts of terephthalic acid,
(Bb2) 0 to 18 mol-parts of isophthalic acid and also
(Bb3) 0 to 18 mol-parts of one or more aliphatic dicarboxylic acids with 6 to 18 C atoms,
the sum of (Bb1), (Bb2) and (Bb3) being 100 mol-parts, and
the lactam- and/or ω-amino acid component (Bc) consisting of one or more lactams and/or ω-amino acids, the sum of the lactams and/or ω-amino acids being 100 mol-parts,
the proportions of (A) and (B) being related to the sum of the used polyamides (A) and (B) and constituting in total 100% by weight of the mixture,
(II) 0 - 70% by weight of fibrous reinforcing materials;
(III) 0 - 30% by weight of particulate fillers, different from (II), (IV) to (VI);
(IV) 0 - 20% by weight of impact modifiers;
(V) 0 - 2.0% by weight of heat stabilisers;
(VI) 0 - 6% by weight of auxiliary materials and/or additives, different from (II) - (V);
the sum of components (I) - (VI) constituting 100% by weight of the polyamide moulding compound.

2. Polyamide moulding compound according to claim 1, **characterised in** the at least one partially crystalline, aliphatic polyamide (A) is selected from the group consisting of polyamide 46, polyamide 6, polyamide 56, polyamide 66, polyamide 11, polyamide 12, polyamide 1212, polyamide 1010, polyamide 1012, polyamide 1112, polyamide 610, polyamide 106, polyamide 612, polyamide 614, polyamide 616, polyamide 516, polyamide 618, polyamide 69, polyamide 810, the copolyamides thereof or the mixtures, blends or alloys thereof.

3. Polyamide moulding compound according to one of the preceding claims, **characterised in that** the mixture (1) comprises
(A) 60 to 85% by weight, preferably 68 to 82% by weight of the at least one partially crystalline, aliphatic polyamide; and also
(B) 15 to 40% by weight, preferably 18 to 32% by weight, of the at least one partially crystalline, partially aromatic polyamide.

4. Polyamide moulding compound according to one of the preceding claims, **characterised in that** the at least one partially crystalline, aliphatic polyamide (A) has a solution viscosity ηᵣₑₗ, measured in m-cresol (0.5 g polymer in 100 ml m-cresol, 20°C) in the range of 1.5 to 3.0, preferably in the range of 1.6 to 2.6, in particular in the range of 1.7 to 2.3.

5. Polyamide moulding compound according to one of the preceding claims, **characterised in that** the diamine component (Ba) is selected from
(Ba1) 65 to 90 mol-parts of 1,6-hexanediamine,
(Ba2) 10 to 35 mol-parts of bis(aminomethyl)cyclohexane and also
(Ba3) 0 to 25 mol-parts of one or more cycloaliphatic diamines, different from A2)
the sum of (Ba2) and (Ba3) being 10 to 35 mol-parts and the sum of (Ba1), (Ba2) and (Ba3) being 100 mol-parts.

6. Polyamide moulding compound according to one of the preceding claims, **characterised in that** the diamine component (Ba) is selected from
(Ba1) 70 to 82 mol-parts of 1,6-hexanediamine,
(Ba2) 18 to 30 mol-parts of bis(aminomethyl)cyclohexane and also
(Ba3) 0 to 12 mol-parts of one or more cycloaliphatic diamines, different from A2)
the sum of (Ba2) and (Ba3) being 18 to 30 mol-parts and the sum of (Ba1), (Ba2) and (Ba3) being 100 mol-parts.

7. Polyamide moulding compound according to one of the preceding claims, **characterised in that** the dicarboxylic acid component (Bb) is selected from
(Bb1) 70 to 100 mol-parts of terephthalic acid,
(Bb2) 0 to 15 mol-parts of isophthalic acid and also
(Bb3) 0 to 15 mol-parts of one or more aliphatic dicarboxylic acids with 6 to 18 C atoms
and the sum of (Bb1), (Bb2) and (Bb3) being 100 mol-parts.

8. Polyamide moulding compound according to one of the preceding claims, **characterised in that** the dicarboxylic acid component (Bb) is selected from
(Bb1) 80 to 100 mol-parts of terephthalic acid,
(Bb2) 0 to 10 mol-parts of isophthalic acid and also
(Bb3) 0 to 10 mol-parts of one or more aliphatic dicarboxylic acids with 6 to 18 C atoms
and the sum of the (Bb1), (Bb2) and (Bb3) being 100 mol-parts.

9. Polyamide moulding compound according to one of the preceding claims, **characterised in that** the quantity of the lactam- and/or ω-amino acid component (Bc) is 0 to 10% by mol, preferably 0 to 5% by mol.

10. Polyamide moulding compound according to one of the preceding claims, **characterised in that** the sum of the mol-parts of (Ba2) bis(aminomethyl)cyclohexane, (Ba3) cycloaliphatic diamine, (Bb2) isophthalic acid and (Bb3) aliphatic dicarboxylic acid is at most 38 mol-parts, preferably at most 35 mol-parts, particularly preferably at most 30 mol-parts.

11. Polyamide moulding compound according to one of the preceding claims, **characterised in that**
the diamine component (Ba) is selected from
(Ba1) 65 to 85 mol-parts of 1,6-hexanediamine,
(Ba2) 15 to 35 mol-parts of bis(aminomethyl)cyclohexane, in particular 1,3-bis(aminomethyl)cyclohexane,
the sum of (Ba1) and (Ba2) being 100 mol-parts
and/or
the dicarboxylic acid component (Bb) is selected from
(Bb1) 80 to 100 mol-parts of terephthalic acid,
(Bb3) 0 to 20 mol-parts of one or more aliphatic dicarboxylic acids with 6 to 18 C atoms, in particular 6 to 12 C atoms, and
the sum of (Bb1) and (Bb3) being 100 mol-parts.

12. Polyamide moulding compound according to one of the preceding claims, **characterised in that** the at least one partially crystalline, partially aromatic polyamide (B) has
a glass transition temperature measured according to ISO 11357-1 and ISO 11357-2 (2013-04) of at least 140°C, preferably of at least 145°C, particularly preferably of at least 150°C,
a melting temperature measured according to ISO 11357-1 and ISO 11357-3 (2013-04) of at most 340°C, preferably of at most 335°C, particularly preferably of 300 to 330°C,
a modulus of elasticity measured according to ISO 527 (2012-06) with a tensile speed of 1 mm/min (modulus of elasticity in tension) on the ISO tensile bar, standard ISO/CD 3167 (2014-11), Type A1, 170 x 20/10 x 4 mm at a temperature of 23 °C, 80 °C and 100 °C in the dry and conditioned state between 2,400 and 4,200 MPa, preferably 2,500 to 4,000 MPa, particularly preferably 2,600 to 3,900 MPa, and/or
a relative viscosity, measured according to DIN EN ISO 307 (2013-08) at 20°C and a concentration of 0.5 g/dl in m-cresol, of 1.45 to 1.95, preferably 1.50 to 1.75, particularly preferably 1.55 to 1.68.

13. Polyamide moulding compound according to one of the preceding claims, **characterised in that** the content of the components, independently of each other, is
(I) from 35 to 84.9% by weight, preferably from 40 to 79.8% by weight, particularly preferably 40 to 69.8% by weight,
(II) from 15 to 60% by weight, preferably from 20 to 55% by weight, particularly preferably 30 to 50% by weight,
(III) at most 20% by weight, preferably in the range of at most 10% by weight, in particular in the range of 0.1 - 5.0% by weight,
(IV) 0% by weight (free of impact modifiers) or between 5 and 15% by weight, in particular from 5 to 12% by weight,
(V) from 0.1 to 2.0% by weight, preferably from 0.15 to 1.8% by weight, particularly preferably from 0.2 to 1.5% by weight, and/or
(VI) at most 6.0% by weight, preferably 0.1 - 4.0% by weight, in particular from 0.2 - 3.0% by weight.

14. Moulded article produced from a polyamide moulding compound according to one of the preceding claims, preferably in the form of a component, for example, in automobiles, in particular in the interior, in the sanitary field, in particular for hot water applications, in the household sphere, in particular for coffee machines, electric kettles, immersion coils, dishwashers, washing machines, in measuring, regulating and control technology, in particular for actuators, sensors, transmissions, compressed air controls, valves, both for hydraulics and pneumatics or in mechanical engineering.

## Revendications

1. Mélange à mouler de polyamides, contenant, ou en étant constitué :
(I) 30 à 100 % en poids d'un mélange de
(A) 52 à 88 % en poids d'au moins un polyamide aliphatique partiellement cristallin ; ainsi que
(B) 12 à 48 % en poids d'au moins un polyamide partiellement aromatique, partiellement cristallin, formé d'un composant diamine (Ba), d'un composant acide dicarboxylique (Bb) et éventuellement d'un composant lactame et/ou acide ω-aminé (Bc), le composant diamine (Ba) étant utilisé selon un rapport en moles de 1,03:1 à 1:1,03 avec le composant acide dicarboxylique (Bb), la quantité du composant lactame et/ou acide ω-aminé étant de 0 à 15 % en moles et la somme des composants (Ba) à (Bc) étant de 100 % en moles, et
le composant diamine (Ba) étant constitué de
(Ba1) 62 à 96 parties en moles de 1,6-hexanediamine,
(Ba2) 4 à 38 parties en moles de bis(aminométhyl)cyclohexane, ainsi que
(Ba3) 0 à 30 parties en moles d'une ou plusieurs diamines cycloaliphatiques différentes de (Ba2),
la somme de (Ba2) et de (Ba3) étant de 4 à 38 parties en moles et la somme de (Ba1), de (Ba2) et de (Ba3) étant de 100 parties en moles,
le composant acide dicarboxylique (Bb) étant constitué de
(Bb1) 64 à 100 parties en moles d'acide téréphtalique,
(Bb2) 0 à 18 parties en moles d'acide isophtalique, ainsi que
(Bb3) 0 à 18 parties en moles d'un ou plusieurs acides dicarboxyliques aliphatiques ayant 6 à 18 atomes de carbone,
la somme de (Bb1), de (Bb2) et de (Bb3) étant de 100 parties en moles, et
le composant lactame et/ou acide ω-aminé (Bc) étant constitué d'un ou plusieurs lactames et/ou acides ω-aminés, la somme des lactames et/ou des acides ω-aminés étant de 100 % en moles,
les proportions de (A) et de (B) étant rapportées à la somme des polyamides (A) et (B) utilisés, et représentant au total 100 % en poids du mélange,
(II) 0 à 70 % en poids de substances de renfort fibreuses ;
(III) 0 à 30 % en poids de charges particulaires différentes de (II), de (IV) à (VI) ;
(IV) 0 à 20 % en poids de modificateurs de résilience ;
(V) 0 à 2,0 % en poids de stabilisants thermiques ;
(VI) 0 à 6 % en poids d'adjuvants et/ou d'additifs, différents de (I) à (V) ;
la somme des composants (I) à (VI) représentant 100 % en poids du mélange à mouler de polyamides.

2. Mélange à mouler de polyamides selon la revendication 1, **caractérisé en ce que** l'au moins un polyamide aliphatique partiellement cristallin (A) est choisi dans le groupe consistant en le polyamide 46, le polyamide 6, le polyamide 56, le polyamide 66, le polyamide 11, le polyamide 12, le polyamide 1212, le polyamide 1010, le polyamide 1012, le polyamide 1112, le polyamide 610, le polyamide 106, le polyamide 612, le polyamide 614, le polyamide 616, le polyamide 516, le polyamide 618, le polyamide 69, le polyamide 810, leurs copolyamides ou leurs mélanges, mélanges mécaniques ou alliages.

3. Mélange à mouler de polyamides selon l'une des revendications précédentes, **caractérisé en ce que** le mélange (I) contient
(A) 60 à 85 % en poids, de préférence 68 à 82 % en poids de l'au moins un polyamide aliphatique, partiellement cristallin ; ainsi que
(B) 15 à 40 % en poids, de préférence 18 à 32 % en poids de l'au moins un polyamide partiellement aromatique, partiellement cristallin.

4. Mélange à mouler de polyamides selon l'une des revendications précédentes, **caractérisé en ce que** l'au moins un polyamide aliphatique, partiellement cristallin (A) présente une viscosité en solution ηᵣₑₗ, mesurée dans le m-crésol (0,5 g de polymère dans 100 ml de m-crésol, 20 °C) dans la plage de 1,5 à 3,0, de préférence dans la plage de 1,6 à 2,6, en particulier dans la plage de 1,7 à 2,3.

5. Mélange à mouler de polyamides selon l'une des revendications précédentes, **caractérisé en ce que** le composant diamine (Ba) est constitué de
(Ba1) 65 à 90 parties en moles de 1,6-hexanediamine,
(Ba2) 10 à 35 parties en moles de bis(aminométhyl)-cyclohexane, ainsi que
(Ba3) 0 à 25 parties en moles d'une ou plusieurs diamines cycloaliphatiques différentes de A2),
la somme de (Ba2) et de (Ba3) étant de 10 à 30 parties en moles, et la somme de (Ba1), de (Ba2) et de (Ba3) étant de 100 parties en moles.

6. Mélange à mouler de polyamides selon l'une des revendications précédentes, **caractérisé en ce que** le composant diamine (Ba) est constitué de
(Ba1) 70 à 82 parties en moles de 1,6-hexanediamine,
(Ba2) 18 à 30 parties en moles de bis(aminométhyl)-cyclohexane, ainsi que
(Ba3) 0 à 12 parties en moles d'une ou plusieurs diamines cycloaliphatiques différentes de A2),
la somme de (Ba2) et de (Ba3) étant de 18 à 30 parties en moles, et la somme de (Ba1), de (Ba2) et de (Ba3) étant de 100 parties en moles.

7. Mélange à mouler de polyamides selon l'une des revendications précédentes, **caractérisé en ce que** le composant acide dicarboxylique (Bb) est constitué de
(Bb1) 70 à 100 parties en moles d'acide téréphtalique,
(Bb2) 0 à 15 parties en moles d'acide isophtalique, ainsi que
(Bb3) 0 à 15 parties en moles d'un ou plusieurs acides dicarboxyliques aliphatiques ayant 6 à 18 atomes de carbone,
la somme de (Bb1), de (Bb2) et de (Bb3) étant de 100 parties en moles.

8. Mélange à mouler de polyamides selon l'une des revendications précédentes, **caractérisé en ce que** le composant acide dicarboxylique (Bb) est constitué de
(Bb1) 80 à 100 parties en moles d'acide téréphtalique,
(Bb2) 0 à 10 parties en moles d'acide isophtalique, ainsi que
(Bb3) 0 à 100 parties en moles d'un ou plusieurs acides dicarboxyliques aliphatiques ayant 6 à 18 atomes de carbone,
la somme de (Bb1), de (Bb2) et de (Bb3) étant de 100 parties en moles.

9. Mélange à mouler de polyamides selon l'une des revendications précédentes, **caractérisé en ce que** la quantité des composants lactame et/ou acide ω-aminé (Bc) est de 0 à 10 % en moles, de préférence de 0 à 5 % en moles.

10. Mélange à mouler de polyamides selon l'une des revendications précédentes, **caractérisé en ce que** la somme des parties en moles de (Ba2) bis(aminométhyl)-cyclohexane, de (Ba3) diamine cycloaliphatique, de (Bb2) acide isophtalique et de (Bb3) acide dicarboxylique aliphatique, est au maximum de 38 parties en moles, de préférence au maximum de 35 parties en moles, d'une manière particulièrement préférée au maximum de 30 parties en moles.

11. Mélange à mouler de polyamides selon l'une des revendications précédentes, **caractérisé en ce que**
le composant diamine (Ba) est constitué de
(Ba1) 65 à 85 parties en moles de 1,6-hexanediamine,
(Ba2) 15 à 35 parties en moles de bis(aminométhyl)-cyclohexane, en particulier de 1,3-bis(aminométhyl)-cyclohexane,
la somme de (Ba1) et de (Ba2) étant de 100 parties en moles,
et/ou
le composant acide dicarboxylique (BB) est constitué de
(Bb1) 80 à 100 parties en moles d'acide téréphtalique,
(Bb3) 0 à 20 parties en moles d'un ou plusieurs acides dicarboxyliques aliphatiques ayant 6 à 18 atomes de carbone, en particulier 6 à 12 atomes de carbone, et
la somme de (Bb1) et de (Bb3) étant de 100 parties en moles.

12. Mélange à mouler de polyamides selon l'une des revendications précédentes, **caractérisé en ce que** l'au moins un polyamide partiellement aromatique, partiellement cristallin (B) présente
une température de transition vitreuse, mesurée selon ISO 11357-1 et ISO 11357-2 (2013-04) d'au moins 140 °C, de préférence d'au moins 145 °C, d'une manière particulièrement préférée d'au moins 150 °C,
une température de fusion, mesurée selon ISO 11357-1 et ISO 11357-3 (2013-04) d'au plus 340 °C, de préférence d'au plus 335 °C, d'une manière particulièrement préférée de 300 à 330 °C,
un module d'élasticité, mesuré selon ISO 527 (2012-06) avec une vitesse de traction de 1 mm/min (module d'élasticité en traction) sur une éprouvette de traction ISO, Norme ISO/CD 3167 (2014-11), type Al, 170 x 20/10 x 4 mm à une température de 23 °C, de 80 °C et de 100 °C à l'état sec et conditionné, entre 2400 et 4200 MPa, de préférence de 2500 à 4000 MPa, d'une manière particulièrement préférée de 2600 à 3900 MPa, et/ou
une viscosité relative, mesurée selon DIN EN ISO 307 (2013-08) à 20 °C et pour une concentration de 0,5 g/dl dans le m-crésol, de 1,45 à 1,95, de préférence de 1,50 à 1,75, d'une manière particulièrement préférée de 1,55 à 1,68.

13. Mélange à mouler de polyamides selon l'une des revendications précédentes, **caractérisé en ce que** les composants présentent, indépendamment les unes des autres, les teneurs suivantes :
(I) de 35 à 84,9 % en poids, de préférence de 40 à 79,8 % en poids, d'une manière particulièrement préférée 40 à 69,8 % en poids,
(II) de 15 à 60 % en poids, de préférence de 20 à 55 % en poids, d'une manière particulièrement préférée 30 à 50 % en poids,
(III) au plus 20 % en poids, de préférence dans la plage d'au plus 10 % en poids, en particulier dans la plage de 0,1 à 5,0 % en poids,
(IV) 0 % en poids (absence de modificateurs de résilience) ou entre 5 et 15 % en poids, en particulier de 5 à 12 % en poids,
(V) de 0,1 à 2,0 % en poids, de préférence de 0,15 à 1,8 % en poids, d'une manière particulièrement préférée de 0,2 à 1,5 % en poids, et/ou
(VI) au plus 6,0 % en poids, de préférence 0,1 à 4,0 % en poids, préférentiellement de 0,2 à 3,0 % en poids.

14. Objet moulé fabriqué à partir d'un mélange à mouler de polyamides selon l'une des revendications précédentes, de préférence sous forme d'un composant par exemple dans une automobile, en particulier dans l'habitacle intérieur, dans le domaine sanitaire, en particulier dans les applications mettant en jeu de l'eau chaude, dans le domaine ménager, en particulier pour les machines à café, les bouilloires, les thermoplongeurs, les lave-vaisselles, les machines à laver, dans la technique de mesure, de régulation et de commande, en particulier pour les actionneurs, les capteurs, les engrenages, les commandes à air comprimé, les vannes, ainsi qu'en hydraulyque, et aussi en pneumatique ou en construction mécanique.
